# EUROPEAN PATENT SPECIFICATION

(11) **EP 4 253 202 B1**
(45) Date of publication and mention of the grant of the patent: **11.12.2024**
(21) Application number: 22193445.8
(22) Date of filing: 01.09.2022
(51) Int. Cl.: B62D 55/00, B62D 55/075, B62D 55/18, B62D 55/26

(54) **CRAWLER TYPE VEHICLE CONFIGURED FOR TRAVELING ALONG A STRUCTURE, METHOD OF HANGING/SUSPENDING THE VEHICLE FOR CARRYING OUT CRAWLER-LIKE TRAVELING MOTION ALONG THE STRUCTURE, AND USE OF AT LEAST ONE CRAWLER TYPE DRIVE UNIT FOR ACTIVE TRAVELING MOTION**
RAUPENFAHRZEUG, DAS ZUM FAHREN ENTLANG EINER STRUKTUR KONFIGURIERT IST, VERFAHREN ZUM AUFHÄNGEN/AUFHÄNGEN DES FAHRZEUGS ZUM AUSFÜHREN EINER RAUPENÄHNLICHEN FAHRBEWEGUNG ENTLANG DER STRUKTUR UND VERWENDUNG VON MINDESTENS EINER RAUPEN-ANTRIEBSEINHEIT FÜR AKTIVE FAHRBEWEGUNG
VÉHICULE DE TYPE CHENILLE CONFIGURÉ POUR SE DÉPLACER LE LONG D'UNE STRUCTURE, PROCÉDÉ D'ACCROCHAGE/SUSPENSION DU VÉHICULE POUR EFFECTUER UN MOUVEMENT DE DÉPLACEMENT DE TYPE CHENILLE LE LONG DE LA STRUCTURE, ET UTILISATION D'AU MOINS UNE UNITÉ D'ENTRAÎNEMENT DE TYPE CHENILLE POUR UN MOUVEMENT DE DÉPLACEMENT ACTIF

(30) Priority: 29.03.2022 EP 22165188; 29.03.2022 EP 22165205; 05.05.2022 EP 22171776
(43) Date of publication of application: 04.10.2023
(73) Proprietor: Ceilix AG, 82049 Pullach i. Isartal (DE)
(72) Inventor: Ilzkovitz, Michel, 1190 Bruxelles (BE); Fau, Guillaume, 1200 Woluwe Saint Lamber (BE); Siedel, Michael Torsten, 53902 Bad Münstereifel (DE)
(74) Representative: Jostarndt Patentanwalts-AG

(56) References cited:
- CN-A- 110 228 541
- DE-U1- 202020 100 256
- JP-A- S59 227 570
- US-A1- 2018 050 747

## Description

### CROSS-REFERENCE TO RELATED APPLICATION

This invention claims priorities of European patent applications No. EP22165188.8, filed March 29, 2022, No. EP22165205.0, filed March 29, 2022 and No. EP22171776.2, filed May 05, 2022.

### TECHNICAL FIELD

The present invention refers to crawler type vehicles, especially ceiling vehicles, configured for traveling in a suspended manner, e.g. headlong at a ceiling structure. Further, the present invention refers to a method for suspending (especially hanging) and actively driving such a crawler type vehicle. In particular, the present invention refers to devices and methods according to features of the enclosed independent claims.

### BACKGROUND

In prior art, an example of which is shown in DE 20 2020 100256 U1, multiple design philosophies have already been established in context with provision of vehicles which shall be able to ensure a predefined traveling motion also in rough terrain or in context with unpredictable reaction forces or at high inclination or even in an overhead arrangement. The present invention focuses on those philosophies departing from the idea that the vehicle or transport medium should engage / interact in predefined manner with a predefined structure or underground, be it in an arrangement on the ground/floor (e.g. ground vehicles), be it a structure at a wall or at the ceiling (e.g. overhead cranes, wall crawling robots) e.g. in a storehouse or in machinery hall. Some ideas of provision of reliable contact between the underground structure and the vehicle have already been published in context with diagnosis and parameter measurement in nearly inaccessible areas or systems (e.g. ductwork, canal systems), including magnetic adhesion / interference. Nonetheless, there is a need for vehicles being capable of providing, by interacting with a predefined structure, both a predefined traveling motion and a high accuracy in positioning (positional accuracy) in very reliable manner, preferably irrespective of the kind of underground or wall constitution, wherein the predefined structure should preferably be provided in very flexible and varied manner to many kinds of underground or wall or ceiling contour / geometry.

The skilled person may differentiate between those vehicles which are provided for moving on the underground and those vehicles which are provided for moving along a ceiling structure, especially since the latter have to be suspended in secure manner also, in order to avoid going down. Therefore, there might be different approaches as to the kinematics ensuring interaction/engagement at the structure's interface.

### SUMMARY

It is an object of the present invention to provide for a (ceiling) vehicle and an active driving mechanism which respectively allows for very reliable and accurate active traveling/driving motion and positioning of the vehicle with respect to the structure in two directions, especially also with respect to an underground structure or to a wall structure or to any further kind of support structure (not only at a ceiling). In particular, the object may also include provision of an appropriate coupling mechanism for reliably coupling the vehicle with the structure. Also, the object of the present invention may further include reliable hanging/suspending methods and active driving methods for movably suspending such a vehicle on/at a structure in two directions, e.g. in context with logistic tasks in suspended/hanging manner at a ceiling structure.

The object of the present invention is solved by the features of the independent main claims. Advantageous features are indicated in the subclaims. If not explicitly excluded, the teachings of the subclaims can be combined arbitrarily with the teachings of the main claims and the subclaims.

According to a first aspect, the present invention concerns kinematics of suspension elements being de-/coupled by a driving motion along circumferential tracks. In that context the present invention may also provide for a vehicle and (optionally) an active driving mechanism which respectively allows for very reliable and accurate traveling/driving motion and positioning of the vehicle with respect to the structure in at least two directions in context with logistic tasks, especially also with respect to a cargo or load functionality, in particular in an arrangement at a ceiling or in an overhead arrangement (upside down). In particular, the present invention also provides for a coupling mechanism allowing for reliably coupling the vehicle with a support structure for transferring a predefined driving motion in at least two spatial dimensions/directions (2D) in very reliable manner to the support structure, in order to allow for reliable positioning of the vehicle.

In particular, the object is therefore solved by a crawler type vehicle configured for traveling in a suspended manner especially headlong at a ceiling structure, wherein the vehicle exhibits:
- a plurality of suspension elements configured for suspending the (ceiling) vehicle and configured for coupling the (ceiling) vehicle to the (ceiling) structure,
- at least one first drive unit configured for circumferential motion and accommodating a first circumferential track and a second circumferential track having a different circumferential shape/contour than the first circumferential track, wherein the suspension elements are attached to the first circumferential track at predefined first longitudinal positions corresponding to a predefined raster, wherein the ceiling vehicle is configured for moving along the ceiling structure by decoupling a subset of the plurality of suspension elements from resp. coupling them into the ceiling structure when the suspension elements are guided along the two circumferential tracks by the circumferential motion.

According to the present disclosure, when it is referred to "structure" or "ceiling structure", likewise, a structure which may also extend on the ground or along a wall or on an inclined plane (or the like) can be designated. The present invention can preferably be applied for ceiling vehicles being arranged at resp. traveling along a ceiling structure, and in addition, the present invention also allows for any motion along any structure with alternative orientation and/or arrangement. Thus, referring to a "structure" or "ceiling structure" includes reference to any other "structure" exhibiting the features allowing for coupling with/to the inventive vehicle and de-/coupling kinematics.

According to the present disclosure, when it is referred to "vehicle" or "ceiling vehicle", the disclosure also generally refers to crawler type vehicles and its relative spatial arrangement or traveling motion (e.g. also on the ground or on an inclined plane or at the wall).

According to the present disclosure, when it is referred to "circumferential track", the disclosure also generally refers to closed loop guidings and lines and predefined contours along which the suspension elements are guided and/or driven.

According to the present disclosure, when it is referred to "profiles" or "T-profiles", the disclosure also generally refers to different kinds of profiles like e.g. I-profiles or L-profiles which may provide for advantageous/favourable arrangements in individual applications.

According to one embodiment, the suspension elements are coupled with the ceiling structure based on form fit (form closure, positive locking), especially exclusively form fit (no force-fit coupling). According to the invention, it has been found that form fit can advantageously be provided by wheels or any other bearing points at a free end of the respective suspension element for being in contact with T-profiles or other kinds of profile rails of the ceiling structure (e.g. C-profiles or L-profiles or I-profiles). It has been found that form fit provides for a preferred/superior manner of coupling in many circumstances, especially in comparison with magnet coupling or the like. Depending on the kind of drive unit or vehicle or spatial orientation of the structure, the skilled person can decide which kind of profile (e.g. T-profile) is most appropriate.

Also, depending on the orientation of the structure, the drive units' traveling motion (as to its spatial direction resp. locomotion) can be individual. The skilled person may implement the present invention for different kinds of spatial traveling motions, especially without any limitation in 2D or even 3D degrees of freedom.

Also, the shape/contour of respective circumferential tracks can be individual, i.e., the skilled person can decide e.g. about a certain degree (radius) of curvature in specific sections of the respective circumferential track. For example, each track exhibits at least three different guide/rail sections, namely: a first (linear) section in which each suspension element is engaged with the profile, wherein the suspension element performs a linear motion; and at least one second (curved) section in which each suspension element performs a de-/coupling motion (wherein each track may exhibit two second sections being arranged oppositely); and a third (linear) section in which the suspension elements are returned to couple again with the profile (for continuous, circumferential motion and engagement process). Thereby, first and second tracks may define the trajectory of the respective free ends of the suspension elements especially exhibiting at least one roller being attached to the respective suspension element by any appropriate means (e.g. by a gliding/rolling contour, a chain drive, a timing belt, or any likewise mechanism or mechanical feature) which is configured for predefining a specific contour and for guiding the free ends resp. the rollers to follow that contour of the tracks.

According to a second aspect, the present invention concerns an application at a ceiling, wherein suspension can specifically be provided in view of active 2D traveling motion along the ceiling structure.

In particular, the above mentioned object can also be solved by a crawler type ceiling vehicle configured for traveling in at least two spatial directions in a suspended manner headlong at a ceiling structure defining a first of said spatial directions, the traveling motion having at least two degrees of freedom, wherein the ceiling vehicle exhibits: a plurality of suspension elements configured for suspending the ceiling vehicle and configured for coupling the ceiling vehicle to the ceiling structure such that the suspension elements can be moved / driven (e.g. rolled, glided) along the ceiling structure in said first spatial direction, and at least two drive units, with at least one crawler track-like drive unit (referred to as first drive unit) accommodating a first circumferential track and a second circumferential track and configured for circumferential driving/guiding motion, wherein the suspension elements are attached to the first circumferential track at predefined first longitudinal positions corresponding to a raster defined by the ceiling structure in a second spatial direction, wherein the second spatial direction is orthogonal to the first spatial direction, wherein the suspension elements engage the second circumferential track at predefined second longitudinal positions, wherein the first and second tracks have a different shape/contour, wherein the first and second tracks are (fixedly) arranged with respect to each other in such a manner that the suspension elements are decoupled from resp. coupled into the ceiling structure by a/the (crawler track-like) circumferential motion provided by the first drive units and first or second tracks, and with at least one (second) drive unit configured for moving the crawler type vehicle in said first spatial direction, wherein the drive units are connected to a motor, especially to an electric motor.

The present invention allows for overcoming limitations of standard overhead cranes such as gantry cranes where only one hoist can operate in the defined workspace.

The vehicle is configured for moving along the ceiling structure in the structure's second spatial direction by decoupling a subset of the plurality of suspension elements from resp. coupling them into the structure, especially when said subset of suspension elements are guided along a curved section of the circumferential tracks. It should be noted that according to the invention, the term "spatial direction" designates a direction in space, thus, the term "spatial direction" may comprise a motion along a space axis in both directions along the space axis. Thus, the term "in a first / second spatial direction" designates a one-dimensional motion (which is bidirectional, i.e., back and forth) having one degree of freedom (especially linear motion). Consequently, a/the term "two-dimensional motion" refers to a motion having two degrees of freedom (especially linear motion in the first spatial direction and in the second spatial direction defined by the structure, the second spatial direction e.g. being orthogonal to the first spatial direction, also in bidirectional manner). The spatial directions are defined via the structure to which the crawler type (ceiling) vehicle is connected, wherein the structure exhibits a plurality of preferably parallel profiles, along which the "first spatial direction" is defined and orthogonal (but remaining in the plain of the structure) to which the "second spatial direction" is defined.

It should be noted that according to the invention, the term "drive unit" especially may designate the whole assembly of drive components and kinematic components required for realizing the desired traveling motion. Also, the drive unit may further comprise a case or chassis accommodating structural parts and elements for arrangement of any parts of the drive section. Further, the drive unit may also comprise structural parts or supports or beams for mounting and support of any hoist component or passenger/cargo transport components.

The shape or dimension of the at least one first drive unit (and also of the circumferential tracks) can be defined individually according to specific applications. E.g., the cross-section geometry of the at least one first drive unit is in the shape of a racecourse (parallel longitudinal sections and opposite semicircle sections). But, alternatively, the cross-section geometry can also be circular or elliptical for example.

The vehicle may comprise different kinds of power units, drives, motors, and actuators, optionally not only for the drive units, but also for further functions as e.g. winch or hoist functions. Generally, the vehicle can be provided as an active vehicle exhibiting at least two motors interacting with the driving mechanism resp. with the suspension elements. In particular, the vehicle exhibits at least one power unit or motor for each drive unit, e.g. an electric motor which is coupled to an axis of rotation of a gear unit interacting with the respective circumferential track or an electric motor interacting with the wheels of the suspension elements via the at least one second drive unit, in order to allow for motorized motion in at least two spatial directions, thus, the wheels can be driven by any drive to actively drive along the profile rails. Also, the vehicle resp. the at least two drive units may comprise an energy storage unit, especially a rechargeable battery pack, providing energy to the at least two drive/motor, irrespective of any external energy supply (power to motors for driving the vehicle resp. the tracks resp. the guiding motion along the tracks). In particular, the vehicle may also exhibit at least one hoist (hoist unit) and a traction mechanism configured for lifting loads. E.g., the hoist unit can be fixed to and supported by the at least one first drive unit.

Each power unit, drive, motor and/or actuator of the vehicle can be coupled to a control unit of the vehicle. In particular, the control unit may control the type/kind of motion, and the control unit may also control e.g. a lifting action of a hoist unit e.g. in context with cargo tasks or logistic tasks in general. For example, the vehicle may exhibit two or three drive units which can be arranged in predefined lateral distance to each other (e.g. defined/connected via cross-beams or the like), and in case the vehicle is driven in active manner, each drive unit may exhibit at least one drive/motor for actively driving the suspension elements along the circumferential tracks or the vehicle in the second spatial direction, and these drives/motors can be controlled depending on each other, e.g. via the speed of rotation. Thus, a traveling direction can be controlled, especially in combination with actively driven wheels of the suspension elements being driven along the profile rails of the ceiling structure.

In other words, in the present disclosure, the term "drive unit" especially refers to a unit accommodating kinematics allowing for traveling motion of the vehicle.

In the following, advantageous aspects of the claimed invention are explained and further below, preferred modified embodiments of the invention are described. Explanations, in particular on advantages and definitions of features, are basically descriptive and preferred, but not limiting examples. If an explanation should be understood as limiting explanation/expression, this is expressly mentioned.

According to one embodiment the crawler type (ceiling) vehicle exhibits a plurality of suspension elements configured for suspending the (ceiling) vehicle and configured for coupling the (ceiling) vehicle to the (ceiling) structure, at least one first drive unit configured for circumferential motion and accommodating a first circumferential track and a second circumferential track having a different circumferential shape/contour than the first circumferential track, wherein the suspension elements are attached to the first circumferential track at predefined first longitudinal positions corresponding to a predefined raster, wherein the (ceiling) vehicle is configured for moving along the (ceiling) structure by decoupling a subset of the plurality of suspension elements from resp. coupling them into the (ceiling) structure when the suspension elements are guided along the two circumferential tracks by the circumferential motion.

According to one embodiment the crawler type (ceiling) vehicle further exhibits at least one second drive unit configured for enabling locomotion of the ceiling vehicle in at least two spatial directions, namely a first spatial direction being predefined by the structure and a second spatial direction being defined by the guiding/driving motion of the at least one first drive unit, wherein the second spatial direction is orthogonal to the first spatial direction, wherein the second drive unit is configured for locomotion of the vehicle in the first spatial direction providing for at least two-dimensional locomotion capability of the vehicle, wherein the respective suspension element exhibits at least one wheel which is arranged and configured for being guided along the structure, especially on a wheel tread of a respective/corresponding profile of the structure, at least two individually controllable motors, wherein at least one first drive unit and at least one second drive unit is connected to at least one motor, and wherein the motor for the first drive units and the second drive units are different, providing for active two-dimensional traveling capability of the vehicle. The first drive units of the vehicle can be scaled up in number; e.g., the vehicle exhibits three first drive units each being based on the same kinematic concept, but at least one of these drive units providing for mirror-inverted type/manner of de-/coupling kinematics.

The present invention allows for advantageous realization of an omniwheel behaviour of the vehicle, providing for at least two-dimensional locomotion capacities of the vehicle.

According to one embodiment the at least one first drive unit of the crawler type vehicle is configured for enabling a closed loop trajectory of the suspension elements, the first and second circumferential tracks are shaped in such a manner that the suspension elements are de-/coupled from/into the structure only when passing a curved section of the tracks, the suspension elements are fixedly attached/coupled by means of a first pulley to/with the first circumferential track, wherein the suspension elements are guided within the second circumferential track by means of a second pulley respectively, wherein the first and second pulley preferably are arranged at a lever arm of the respective suspension element, wherein the respective suspension element preferably has an L-shape, and/or wherein each suspension element exhibits a first pulley and a second pulley arranged in longitudinal distance with respect to the first pulley at a lever arm of the respective suspension element, wherein the suspension element is coupled to the first and second tracks via the first and second pulleys, and/or wherein each suspension element exhibits a lever arm accommodating/supporting a/the pulley guided by the second track, wherein the pulley is arranged at a free end of the lever arm, and wherein in a linear section of the track, the lever arm is pointing in the driving/traveling direction, at least roughly, wherein the suspension elements are connected to each other by means of longitudinal connecting elements, especially by longitudinal connecting elements being connected at the axis of a/the first pulley of the respective suspension element, thereby forming a closed loop of interrelated suspension elements distanced to each other in the predefined raster, the first circumferential track exhibits a chain or is provided/defined by a chain forming a closed loop of interrelated chain elements connecting the suspension elements, wherein the vehicle exhibits a plurality of counter bearings, especially configured and arranged for frontally interacting with the ceiling structure, wherein the plurality of counter bearings are preferably coupled to/with the first circumferential track, especially coupled to chain elements of the first circumferential track;
wherein the vehicle exhibits a further first drive unit accommodating further circumferential tracks, wherein a plurality of further suspension elements are attached to the further circumferential tracks in predefined longitudinal positions corresponding to a/the predefined raster and are configured for suspending the vehicle and for coupling the vehicle to the structure, especially such that the vehicle is secured with respect to opposite directions at the structure, wherein the vehicle exhibits further suspension elements which are attached to further circumferential tracks, wherein the suspension elements and the further suspension elements momentarily engaging the structure are securing/blocking the vehicle at the structure with respect to the driving/traveling direction and opposite thereto, and/or wherein the vehicle exhibits a further drive unit which exhibits the same configuration as a/the first drive unit but with mirror-inverted arrangement of the further suspension elements and further circumferential tracks, wherein the further suspension elements are guided/driven in a direction opposite to the guiding direction of the suspension elements of the first drive unit, especially such that both the respective suspension elements and further suspension elements are simultaneously de-/coupling to/from the structure, the at least one first drive unit is configured for lifting the respective suspension element out of the structure in an unloaded state, especially such that the at least one first drive unit provides for both de-/coupling kinematics for a subset of momentarily unloaded suspension elements and suspension of the vehicle by a subset of momentarily loaded suspension elements at the same time; and/or wherein the at least one first drive unit has a substantially plane configuration; and/or wherein the vehicle exhibits at least two first drive units arranged in parallel to each other; and/or wherein the circumferential tracks are respectively guided/driven in a plane, extending in two-dimensional manner; and/or wherein the at least one first drive unit is coupled by means of at least three suspension elements, and/or wherein the respective suspension element has an L-shape which provides for two arms defining the relative arrangement of a/the wheel and first and second pulleys of the respective suspension element. This configuration is favourable in view of scaling, allows for providing, along a rectilinear section of the tracks, a section in which suspension of the vehicle can be secured by scalable number of suspension elements. Further, this arrangement allows for high accuracy of the predefined path and amount of the predefined motion of a free end (or of a/the wheel) of the respective element. The lever arm pointing (roughly) in the driving/traveling direction (second spatial direction) allows for effecting a great effective length of the lever arm section between first and second pulley, thereby ensuring considerable pivot motions for de-/coupling kinematics. Also, this configuration allows for adjusting the shape/contour of the track by means of a chain tensioning device or other kinds of deviating point/pulley. In particular, the first circumferential track can be defined by a chain connecting the suspension elements. According to the present disclosure, the term "chain" may also refer to a belt or cable or any other circumferential driving element that allows to follow/constrain to the circumferential track(s). The skilled person may decide which configuration of the chain is most appropriate in/for an individual application. The plurality of counter bearings allow for securing the vehicle's position with respect to the further (second) spatial direction (normal force being exerted on the structure in case the vehicle is arranged in a headlong manner upside down or at an inclined plane). In particular, the plurality of counter bearings may/can provide for a counter force drive module (counter force unit) which allows/facilitates even more secure positioning and suspension of the vehicle, e.g. on an inclined plane or in an overhead arrangement (upside down). The free ends of the counter bearings can be configured in dependence on the type/shape of the (ceiling) structure; e.g., the free ends of the counter bearings exhibit at least one wheel or pulley. A further first drive unit accommodating further circumferential tracks configured for synchronous circumferential motion of further suspension elements facilitates scaling up and favours configurations for vehicles having high stability and security requirements. Further first drive units also provide for high security and even self-locking suspension. The closed loop of interrelated suspension elements distanced to each other in the predefined raster ensures accurate relative arrangement of the plurality of suspension elements with respect to each other. Each longitudinal connecting element preferably exhibits the shape of a rod or stick or small lever arm. In other words: The plurality of longitudinal connecting elements may provide for a closed loop of interrelated elements which form a kind of chain or the like which is guided/driven along the circumferential track(s). A further (first) drive unit with mirror-inverted arrangement advantageously fits with a ceiling structure being made of or being provided by T-profiles or T-shaped support elements (especially T-shaped ceiling beams). The provided kind of de-/coupling kinematics also provides for a quite energy-efficient and force-efficient manner of driving/traveling/advancing. Also, minimising forces and momentum in context with the de-/coupling process also favours potentially very fast crawling motion(s) even in case the vehicle exhibits considerable weight or has to lift considerable loads. The parallel arrangement of multiple first drive units that have a substantially plane configuration in a lateral view (side-face) favours implementation of two or even three first drive units in a quite narrow/slim arrangement, respectively. The guiding/driving of circumferential tracks in a plane, extending in two-dimensional manner favours implementation of a linear traveling motion combined with a motion along the ceiling structure, orthogonal to the traveling motion of the circumferential tracks. The coupling of the vehicle by means of at least three suspension elements provides for distributing any forces and momentum via a plurality of suspension elements, thereby ensuring a good security and stability level. The L-shape of the configuration allows for a robust design; also, the suspension elements can easily be designed individually depending on specific applications and specific ceiling structures, by adapting the design of the lever arms.

According to one embodiment the vehicle comprises at least one holonomic wheel being part of the second drive unit. This provides active motion in the first spatial direction defined by the structure via the second drive unit and the motor connected thereto, and passive motion in the second spatial direction.

According to the present invention, a holonomic wheel is a wheel whose wheel tread consists of rollers whose axes of rotation are at an angle to the axis of rotation of the main wheel. The absolute angle between the axes can for example be any angle between 5 and 90 degrees, especially 45 degrees. This angle has to be regarded when controlling the at least two motors, since the movement of the first drive units and the second drive unit are not independent in the case that the angle of the rollers to the wheel is different than 90 degrees. An angle smaller than 90 degrees can result in advantageous configurations regarding the traction of the holonomic wheel with the profiles of the structure. In case the angle is smaller it is possible to place more rollers with the same diameter around the wheel, which enhances traction transmission and can compensate for gaps in the traction transmission of a single omniwheel.

According to one embodiment the holonomic wheel is disc shaped and comprises a plurality of equally distributed rollers around its circumference, such that it allows for traction control in the first spatial direction and is not affected by a motion in the second spatial direction. In this case the angle between the rollers and the wheel is 90 degrees. This allows for easier control of the configuration.

According to one embodiment the crawler type vehicle comprises a holonomic wheel set consisting of at least two coaxially arranged holonomic wheels, wherein the wheel set is connected to the second drive unit. The holonomic wheels are preferably disc shaped and have a thickness that is half the width of the profiles of the structure, such that there is room for at least two holonomic wheels of the holonomic wheelset to interact with one profile (rail) of the structure. This configuration enhances the traction of the disc shaped holonomic wheels.

According to one embodiment each of the coaxially arranged holonomic wheels has a predefined offset in the azimuthal direction in respect to their adjacent holonomic wheels. It is preferred that if one holonomic wheel comprises n rollers, that are equally distributed around the circumference of the wheel, each wheel is offset by 180/n degrees with respect to its neighbours. This way, it can be ensured that there is always at least one wheel of the wheelset that is in contact with the profile of the structure such that slip of the second drive unit is prevented.

According to one embodiment the holonomic wheel(s) is/are connected to a return mechanism that applies a force to the holonomic wheel(s) pressing it/them against the structure. This configuration enhances traction of the holonomic wheel on the profiles (rails) of the structure additionally.

According to one embodiment the vehicle comprises at least one wide elongated gearing wheel for meshing with a defined raster in the first spatial direction, wherein the gearing wheel is connected to the second drive unit. The wide elongated gearing wheel, also called "spur gear", conditions an additional raster, a "sub raster" in the profile of the structure, such that the teeth of the gear mesh with the sub raster. When the spur gear is turned via the motor and the second drive unit, the vehicle pulls itself forward in the first spatial direction.

According to one embodiment the elongated gearing wheel is tapered at the ends to allow a smooth transition into the additional raster. This mitigates the risk of being stopped or causing damage by imperfect alignment with the sub raster elements.

The above mentioned object is also solved by a crawler type vehicle arrangement (especially ceiling vehicle arrangement) comprising at least one vehicle (especially ceiling vehicle) as described above and a/the structure (especially ceiling structure) exhibiting a plurality of profiles (especially (parallel) T-profiles) defining a/the raster of the structure, wherein the raster of the relative arrangement of the suspension elements corresponds to the structure's raster, wherein a subset of the suspension elements (namely those momentarily engaging the profiles) are arranged/configured for being guided / driven along the profiles in a (first) spatial direction being defined by the structure, the vehicle's traveling motion thereby having at least two degrees of freedom. This provides for above mentioned advantages, especially in view of an optimized form-fit at the coupling interface between suspension elements and the structure.

The above mentioned object is also solved by a crawler type vehicle arrangement comprising at least one crawler type vehicle with a spur gear and a structure exhibiting a plurality of first profiles defining a raster of the structure in a first spatial direction, wherein the plurality of profiles each exhibit second profiles defining a raster of the structure in a second spatial direction, wherein the suspension elements are configured for being guided along the first profiles in the first spatial direction being defined by the structure, the vehicle's traveling motion having at least two degrees of freedom, and wherein the gearing wheel is configured for meshing with the second profiles, such that the crawler type vehicle can move omnidirectionally via the at least two individually controllable drive units.

The above mentioned object is also solved by a method of hanging/suspending a crawler type (ceiling) vehicle at/from a (ceiling) structure for traveling in a suspended manner headlong the (ceiling) structure, meaning actively driving the crawler type ceiling vehicle, especially a crawler type ceiling vehicle as described above, wherein the ceiling vehicle is suspended by means of a plurality of suspension elements coupling the (ceiling) vehicle to the (ceiling) structure, wherein a circumferential guiding/driving motion is provided by at least one first drive unit connected to a motor accommodating first and second circumferential tracks having a different circumferential shape/contour, wherein the suspension elements are attached to the first circumferential track at predefined first longitudinal positions corresponding to a raster defined by the (ceiling) structure, wherein the (ceiling) vehicle is suspended such that it can move along the (ceiling) structure by decoupling a subset of the plurality of suspension elements from resp. coupling them into the ceiling structure when the suspension elements are guided along the circumferential tracks by the circumferential motion (guiding/driving motion), and wherein a further motor is connected to a second drive unit such that the vehicle can actively move in two dimensions along the structure. This provides for above mentioned advantages, especially in view of a high degree of autonomy (movability) and security of any motion along the ceiling structure.

The above mentioned object can also be solved by a method of providing a two-dimensional crawler-like traveling motion by means of a crawler type ceiling vehicle being suspended headlong at a ceiling structure defining a first spatial direction, especially by means of a crawler type ceiling vehicle as described above, wherein a plurality of suspension elements suspending the ceiling vehicle are momentarily coupled with the ceiling structure such that the suspension elements can be moved / driven via a motor along the ceiling structure in said first spatial direction, wherein a circumferential guiding/driving motion is provided by at least one drive unit (especially crawler track-like) accommodating a first circumferential track and a second circumferential track, wherein the suspension elements are attached to the first circumferential track at predefined first longitudinal positions corresponding to a raster defined by the ceiling structure in a second of said spatial directions, wherein the suspension elements engage the second circumferential track at predefined second longitudinal positions, wherein the first and second tracks have a different shape/contour, wherein the suspension elements are decoupled from resp. coupled into the ceiling structure by a/the circumferential guiding/driving motion of the at least one drive unit or tracks, wherein during the circumferential guiding/driving motion in second spatial direction, the first and second tracks remain in (fixed) relative arrangement with respect to each other, especially in parallel arrangement.

The above mentioned object can also be solved by a method of providing a crawler-like traveling motion or positioning by means of a crawler type vehicle being coupled to a structure having a predefined raster, especially by means of a crawler type vehicle as described above, wherein a plurality of suspension elements of the vehicle are momentarily coupled to the structure, wherein de-/coupling kinematics comprising a first circumferential track and a second circumferential track having a different circumferential shape/contour than the first circumferential track at least in curved sections of the track(s) provide for respectively de-/coupling a subset of the suspension elements to/from the structure when guiding/driving the suspension elements along a curved section of the circumferential tracks, especially by means of at least one drive unit (especially crawler track-like) accommodating the first and second circumferential tracks, wherein the suspension elements are attached to the first circumferential track at predefined first longitudinal positions corresponding to the raster of the structure, wherein the suspension elements are guided in/by the second circumferential track at respective second longitudinal positions being longitudinally offset with respect to the respective first longitudinal position, wherein the de-/coupling kinematics provide for both a first (vertical) motion orthogonal to the traveling/driving direction of the circumferential tracks and a second motion pivoting each suspension element when it is guided / driven along a/the (momentary) curved section of the circumferential tracks by the circumferential guiding/driving motion.

The circumferential motion is transmitted/transferred by the suspension elements momentarily engaging the ceiling structure. This also allows for distributing any forces and momentum via all suspension elements momentarily engaging the ceiling structure. In other words: Scaling can easily be done via the length of the vehicle. It should be noted that actio can be provided by the (respective) drive unit(s), and only reactio is provided by the ceiling structure. There is no need of any active component or drive acting within the ceiling structure.

The guiding/driving motion is provided by first drive units, wherein one of the first drive units provides for a circumferential motion of a first subset of the suspension elements on a first closed loop trajectory (especially in a first direction) and another one of the first drive units provides for a circumferential motion of a second subset of the suspension elements on a second closed loop trajectory (especially in a second direction which moving direction is optionally the same or different from the first closed loop trajectory, especially opposite to the first closed loop trajectory). This arrangement also favours a secure manner of coupling, wherein the vehicle can be secured in different spatial directions.

The above mentioned object is also solved by a computer program comprising instructions which, when the program is executed by a computer, cause the computer to execute the steps of the method described above in context with provision and control of the circumferential guiding/driving motion, especially by controlling at least one of the first drive units. This provides for above mentioned advantages, especially in view of remote control of the vehicle.

The above mentioned object is also solved by use of at least one crawler type drive unit accommodating first and second circumferential tracks having different circumferential shapes/contours, for hanging/suspending and actively driving a crawler type ceiling vehicle to travel in a suspended manner especially headlong at a ceiling structure, especially for hanging/suspending and actively driving a crawler type ceiling vehicle as described above, especially in a method as described above, wherein the ceiling vehicle is suspended by means of a plurality of suspension elements coupling the ceiling vehicle to the ceiling structure, wherein the suspension elements are attached to the first circumferential track at predefined first longitudinal positions corresponding to a raster defined by the ceiling structure, wherein a/the circumferential guiding/driving motion is provided by the at least one of the first drive units such that the vehicle moves along the ceiling structure by decoupling a subset of the plurality of suspension elements from resp. coupling them into the ceiling structure when the suspension elements are guided/driven along the circumferential tracks in second spatial direction. This provides for above mentioned advantages, especially also in view of allowing for a simple and cost-effective ceiling structure. In other words: The at least one crawler type drive unit provides for both de-/coupling kinematics and suspension of the vehicle at the same time (simultaneously). In that context, using battery technology (e.g. embedded in the vehicle to supply energy to the vehicle, e.g. for powering an on-board controller, hoist(s) and motor(s) for locomotion), may render the vehicle even more autonomous.

### SHORT DESCRIPTION OF FIGURES

These and other aspects of the present invention will also be apparent from and elucidated with reference to the embodiments described hereinafter. Individual features disclosed in the embodiments can constitute, alone or in combination, an aspect of the present invention. Features of different embodiments can be carried over from one embodiment to another embodiment. In the drawings:
**Figures 1A****,** **1B****,** **1C****,** **1D****,** **1E****,** **1F****,** **1G****,** **1H, 1J, 1K, 1L, 1M, 1N, 1O** show in perspective views and in side views components (first drive unit) of a ceiling vehicle;
**Figures 2A, 2B, 2C** show in perspective views an arrangement of suspension elements and respective arrangement along a circumferential track of a ceiling vehicle;
**Figures 3A, 3B, 3C** show in perspective views details of suspension elements of a ceiling vehicle;
**Figures 4A****,** **4B, 4C, 4D****,** **4E, 4F****,** **4G** show in perspective views and in side views components (first drive units) of a ceiling vehicle;
**Figures 5A, 5B, 5C, 5D** illustrate in different perspective views an exemplary path of a motion of a ceiling vehicle;
**Figures 6A, 6B** show, in side views, components of a ceiling vehicle (full suspension, and suspension with respect to vertical forces of inertia and lateral forces);
**Figures 7A, 7B****,** **7C, 7D** illustrate in different perspective views exemplary paths of motion (orientations of operation) of a ceiling vehicle;
**Figures 8A, 8B****,** **9A, 9B** show in perspective views ceiling vehicles with and without counter bearing;
**Figures 10A, 10B** show in perspective views a ceiling vehicle;
**Figures 11A, 11B, 11C****,** **14A, 14B** show in perspective views details of suspension elements (and their suspension) of a ceiling vehicle shown in Fig. 10;
**Figures 12A, 12B** show in side views details of suspension elements of a ceiling vehicle shown in Fig. 10;
**Figure 13** shows in a perspective view details of a ceiling vehicle shown in Fig. 10;
**Figure 15** shows in a side view components of a first drive unit of a ceiling vehicle shown in Fig. 10;
**Figures 16A, 16B** show in perspective views some of the details of suspension elements of a ceiling vehicle shown in Fig. 10;
**Figure 17** shows the side view shown in Fig. 6 of a ceiling vehicle according to embodiments;
**Figure 18** shows a view from the back of the ceiling vehicle in Fig. 17;
**Figure 19** shows a top view of the ceiling vehicle in Fig. 17;
**Figure 20** shows a bottom view of the ceiling vehicle in Fig. 17;
**Figure 21** shows a perspective view of the ceiling vehicle in Fig. 17;
**Figure 22** shows a detail of components (second drive unit) of the ceiling vehicle in Fig. 17;
**Figure 23** shows an exploded view of components (first drive units and a second drive unit) of a vehicle according to embodiments, especially according to the embodiment shown in Fig. 17;
**Figures 24A, 24B** show a detail of components (first drive units and a second drive unit) of a vehicle according to embodiments, especially according to the embodiment shown in Fig. 17;
**Figure 25** shows the side view as in Fig. 6 of a ceiling vehicle according to further embodiments;
**Figure 26** shows a top view of the ceiling vehicle in Fig. 25;
**Figure 27** shows a bottom view of the ceiling vehicle in Fig. 25;
**Figure 28** shows a perspective view of the ceiling vehicle in Fig. 25;
**Figure 29A, 29B, 29C** show a close up view of the interaction of the ceiling vehicle in Fig. 25 with the structure;

### DETAILED DESCRIPTION OF FIGURES

First, the reference signs are described in general terms; individual reference is made in connection with respective figures.

The present invention provides for a vehicle 10, especially a ceiling vehicle 10, having at least one drive unit 11 (especially crawler track-like), especially a first drive unit 11a and a further first drive unit 11b and optionally also a further first drive unit 11c. The vehicle 10 is configured for traveling along a ceiling structure 1 exhibiting a predefined raster 1a which is, e.g., defined by T-profiles resp. T-rails 1.1 or any such profile rails. The profiles 1.1 exhibit at least one wheel tread 1.2, and optionally, a power rail 1.3 providing for energy supply can be arranged at the profiles. The vehicle 10 is coupled to the structure 1 and suspended via a plurality of suspension elements 13 (e.g. each including at least one chain element). A crawler type ceiling vehicle arrangement 100 is composed of at least one ceiling vehicle 10 and at least one ceiling structure 1.

The at least one drive unit 11 provides for a drive mechanism 11.1 with at least one motor or actuator, which allows for circumferential motion of the suspension elements 13 along circumferential tracks 12, namely simultaneously along a first and a second circumferential track 12a, 12b, which tracks exhibit individual shapes/contours XZa, XZb. Preferably, the tracks only extend two-dimensionally (2D), i.e. in a plane, and the shape is different at least in curved sections of the tracks. Each track 12a, 12b exhibits a parallel/linear section 12p (resp. two parallel sections) and a redirection/curved section 12r (resp. two curved sections). A lateral area resp. surface shell 11.2 of the at least one drive unit is preferably flat, plane, even, respectively on each lateral side. Such a configuration is also favourable in view of interconnection of several drive units.

The vehicle 10 exhibits at least one further first drive unit 11b exhibiting first and second circumferential tracks 12a, 12b and accommodating a plurality of further suspension elements 13b which are arranged mirror-inverted, with respect to the suspension elements 13 of the first drive unit 11a. The first and second drive units 11a, 11b provide for a traveling motion (e.g. by a synchronous guiding/driving motion of/to the suspension elements), and these drive units 11a, 11b can be interconnected, e.g. via cross-beams or the like. Also, the first and second drive units 11a, 11b may provide for different driving motions, e.g. in order to force a non-linear, but curved/curvilinear traveling motion. The desired/required traveling motion can be controlled via a control unit 30 coupled to at least one motor or actuator 17. In particular, the vehicle can be provided as a kind of passive vehicle which traveling motion is induced by external forces; in such a configuration, the inventive kinematics provide for hanging/suspending the vehicle, but not for actively driving the vehicle for any traveling motion. The drive section may also comprise at least one gear unit 18 configured for interacting with the track(s) and at least one energy storage unit 19. A sensor arrangement 40, e.g. comprising position sensors and velocity sensors and/or weight sensors and/or gyroscopes, may provide sensor data to the control unit.

Each suspension element 13 exhibits a first pulley 13.1 and a second pulley 13.2, and optionally, a wheel 13.3 is provided at the free end of the suspension element 13 (bearing point P13). The first and second pulleys are arranged on a lever arm 13.5 in distance from/to each other (y-offset, longitudinal extension y13 of lever arm); the bearing point P13 resp. the wheel 13.3 is arranged at a protruding section resp. suspension arm 13.6 (z-offset). At the free end of the suspension arm, optionally, a current collector resp. power-slider 13.4 (conductive slider for energy transfer) is provided in an arrangement geometrically corresponding to a/the power rail 1.3 of the respective profile 1.1. The plurality of suspension elements 13 of a/the respective drive unit 11 can be interconnected via longitudinal connecting elements 15 which can ensure a closed loop 15a of interrelated suspension elements. Thus, the suspension elements 13 are coupled to the respective circumferential tracks.

In other words: The suspension elements preferably exhibit a wheel 13.3 performing a rolling motion on the profile, allowing for motion which is orthogonal to the motion predefined and evoked by the tracks, wherein the wheel is positioned orthogonally with respect to the first and second pulleys. The wheel is motorised by means of further actuators or motors. The first pulley 13.1 is engaged with the first or second circumferential track, thereby following that track; also, the second pulley 13.2 is engaged with the first or second circumferential track, thereby following that track (which is different from the track engaged by the first pulley, i.e. vice versa). The lever arm 13.5 is preferably L-shaped, especially provided as integral element in one piece (massive, solid).

Preferably, the structure 1 and its raster 1a is defined by profiles 1.1 being arranged in parallel and with similar distance (pitch) to adjacent profiles. Each profile is preferably configured to support geometries/surface(s) which are adequate for interaction with the wheel(s) of the suspension elements (e.g. T-profile, C-profile, L-profile, I-profile), and a series of such profiles preferably provides for a planar surface at least in sections.

By means of the circumferential tracks and the suspension elements, the (respective) drive unit provides for de-/coupling kinematics 20 which ensure both vertical motion kinematics 20a and non-circular pivot motion kinematics 20b. Thereby, de-/coupling of each suspension element can be effected via circumferential motion along the tracks without the need of any axial telescopic motion within each suspension element. I.e., the suspension element can be designed as purely mechanic unit.

In particular in context with logistic tasks, the vehicle 10 may exhibit at least one hoist unit 50 providing for a traction mechanism 51 (especially with rope winch) and having at least one transmission means 53 (especially a rope).

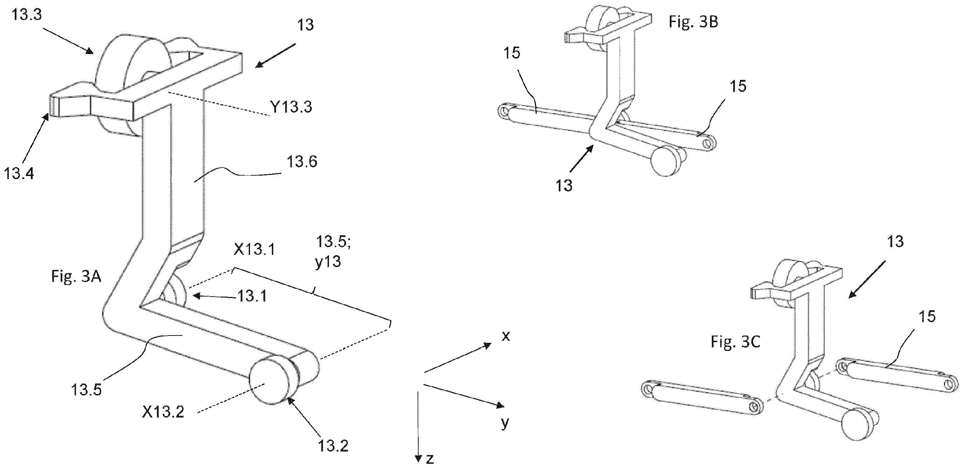

In the following, the kinematics provided by the guiding/driving motion along the circumferential tracks is described in general, first:
The first pulley 13.1 of each suspension element 13 rotates about a first pulley axis X13.1 and defines a first guiding point G13.1 (coupling the first track and the respective suspension element), and vice versa, the corresponding point of the corresponding circumferential track defines that first guiding point G13.1 for each suspension element. Likewise, the second pulley 13.2 of each suspension element 13 rotates about a second pulley axis X13.2 (which is preferably aligned in parallel) and defines a second guiding point G13.2 (coupling the second track and the respective suspension element). When referring to the kinematics of each suspension element, an instantaneous centre of rotation Cr of each suspension element is defined by the axis X13.1 of the first pulley 13.1 being coupled to the first track 12a, wherein coupling/attachment/fixation can be ensured e.g. at the axial section between a/the suspension arm 13.6 and the first pulley 13.1 (cf. Fig. 3B). The two tracks 12a, 12b are arranged with respect to another in such a manner that the contacting/bearing point/area P13 of the respective suspension element 13 can be hooked or hitched on the ceiling structure. The wheel 13.3 of each suspension element rotates about a wheel axis Y13.3 which is preferably aligned orthogonally to the first and second pulley axis X13.1, X13.2. Since each suspension element 13 is coupled to the tracks 12a, 12b in predefined positions, namely in a predefined first longitudinal position y12a via the first pulley 13.1 and in a predefined second longitudinal position y12b via the second pulley 13.2, when driving the tracks resp. when guiding the suspension elements along the tracks, the bearing point P13 at the free end of the suspension element 13 is guided according to the relative position/contour and distance of the tracks.

In the figures, (x) designates a/the first spatial direction (especially cross direction, especially direction of longitudinal extension of T-profiles), and (y) designates a/the second spatial direction (especially longitudinal direction or momentary driving direction of the drive units), and (z) designates a/the third spatial direction (especially vertical direction).

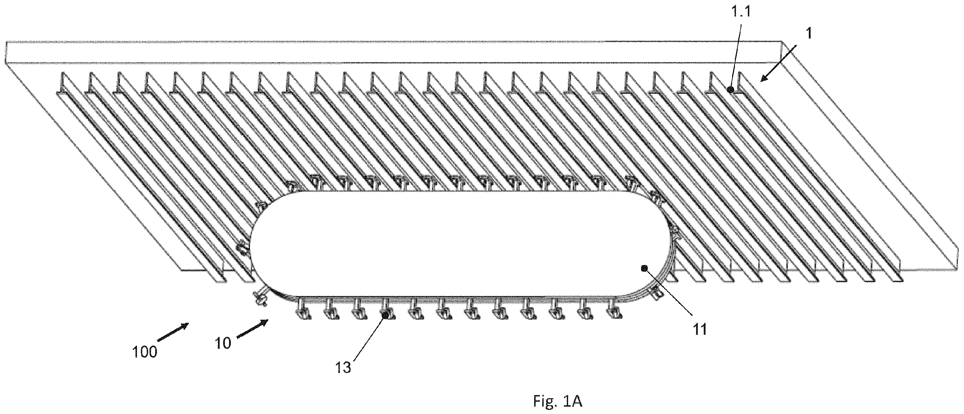

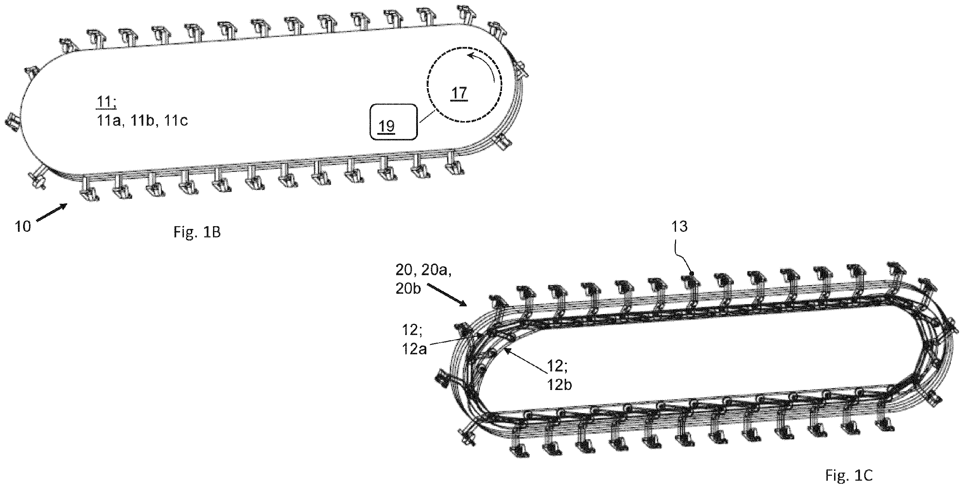

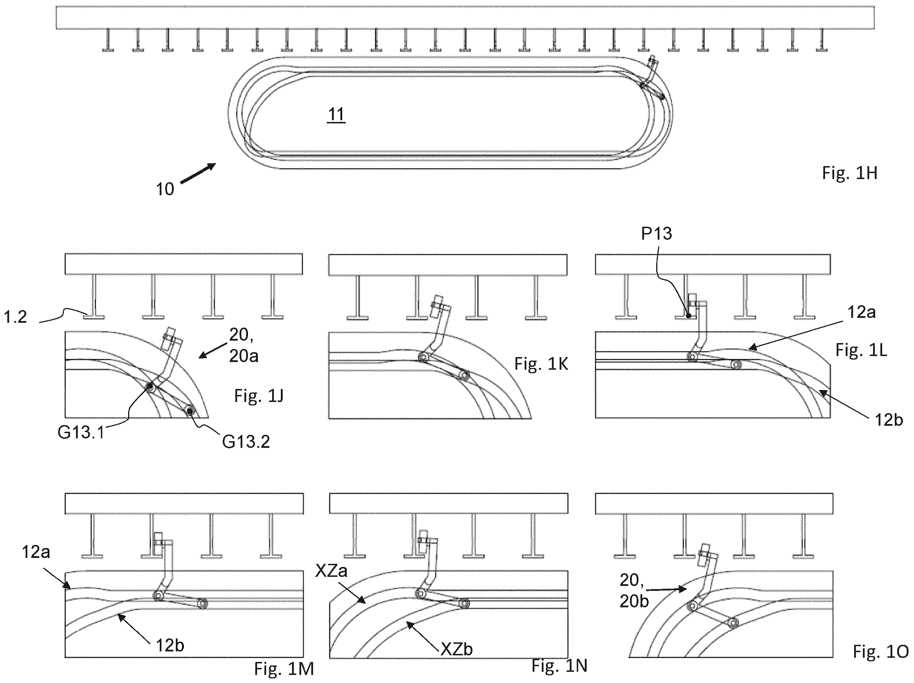

**Fig. 1A** shows a (ceiling) vehicle 10 exhibiting a first drive unit 11 and suspension elements 13, wherein a subset of the suspension elements 13 is momentarily coupled to a/the ceiling structure 1, namely to T-profiles. The suspension elements 13 are guided and also actively driven along two circumferential tracks (not shown, cf. Fig. 1C), and de-/coupling is carried out in curved sections of the tracks.

The vehicle 10 shown in Fig. 1A is suspended/hanging at a ceiling structure. Nonetheless, the vehicle 10 may also be suspended in a similar structure being arranged on the ground or at the wall. The vehicle is not necessarily provided in the form of a ceiling vehicle; rather, Fig. 1A illustrated an application/use at a ceiling structure.

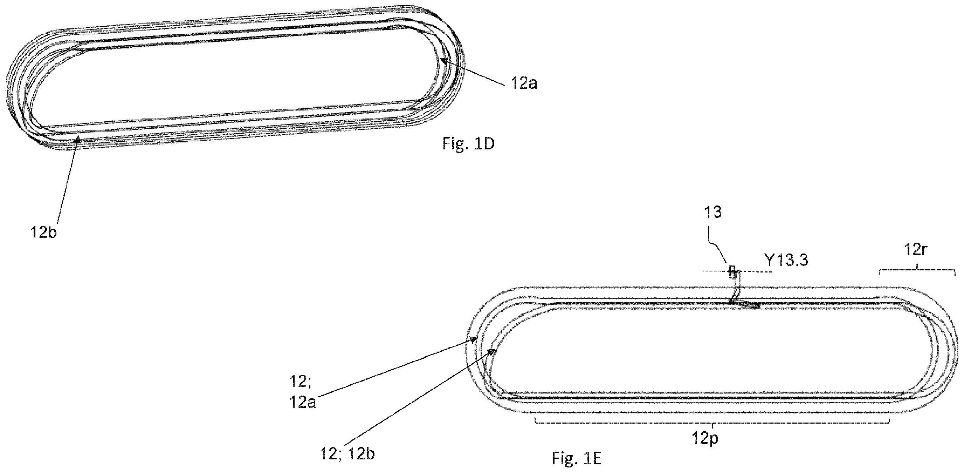

**Fig. 1B, 1C****,** **1D, 1E** show separate components of the respective first drive unit 11, 11a, 11b, 11c. At least one drive 17 provides for circumferential motion of the tracks 12a, 12b, especially by means of at least one gear unit 18 engaging the tracks. It is shown that the de-/coupling kinematics are provided within the curved sections 12r of the first and second circumferential tracks 12a, 12b. In contrast, within the parallel section(s) 12p, the suspension elements 13 remain in predefined relative positions at/with respect to the ceiling structure. In that section, the axis Y13.3 of the wheel 13.3 of the respective suspension element 13 is aligned parallel to the parallel section(s) 12p of the tracks.

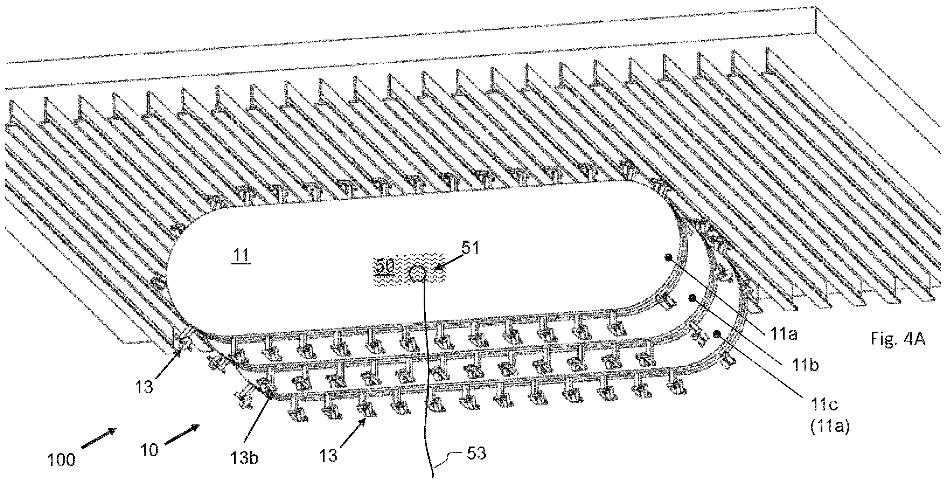

In case the vehicle exhibits several first drive units 11a, 11b, some of these components may also be arranged in a mirror-inverted manner, especially the suspension elements (cf. Fig. 4A). Thus, any detailed description of the figures relating to any separate/single component of the respective drive unit may also describe a similar configuration of any further drive units or any further redundant components.

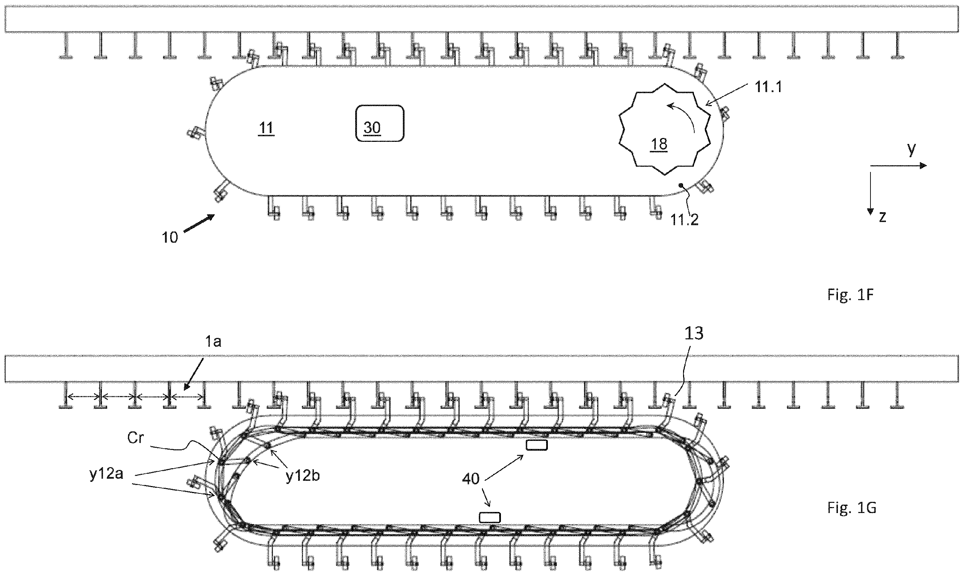

**Fig. 1F, 1G** illustrate the curved sections 12r in more detail. It can be seen that both the radius of curvature and the distance of the tracks with respect to each other deviates/changes in value and direction, thereby effecting a pivot motion of the suspension arm 13.6 (protruding section) and the wheel 13.3 resp. bearing point P13 of the respective suspension element 13 (especially pivoting within the plane yz as shown in Fig. 1F and pivoting about an x-axis and around the instantaneous centre of rotation Cr). Thus, both vertical motion kinematics 20a and non-circular pivot motion kinematics 20b can be provided by means of rigid/stiff components being guided/driven along two circumferential tracks with different shape/contour.

**Fig. 1H, 1J, 1K, 1L, 1M, 1N, 1O** show some more details of the de-/coupling kinematics 20. In particular, it can be seen that the first track 12a has a curvature bent up (upwards), thereby effecting a slight lifting of the wheel 13.3 from the wheel tread 1.2, namely when the first pulley 13.1 is passing that section. In particular, apart from one single section, the shape/contour XZb of the second circumferential track 12b runs (is arranged) within the shape/contour XZa of the first circumferential track 12a.

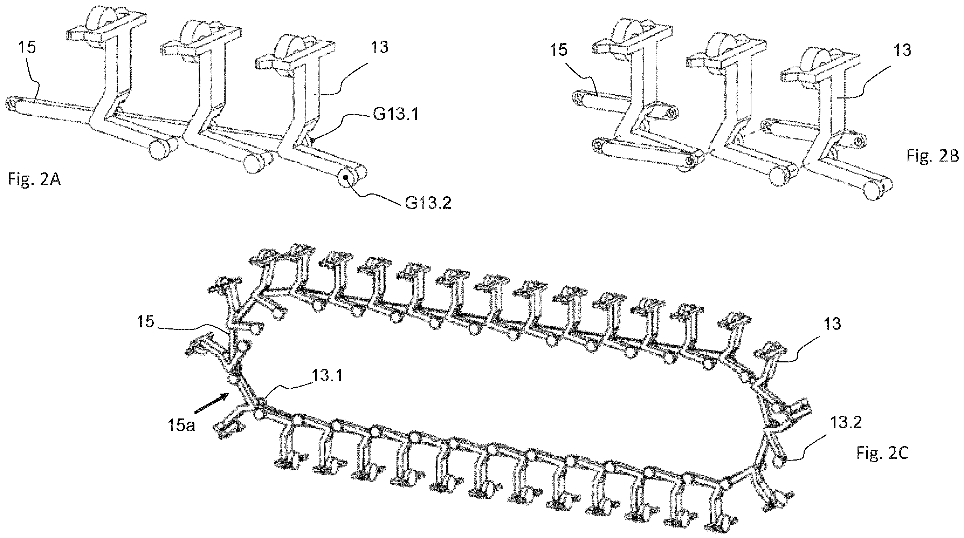

**Fig. 2A, 2B, 2C** show a plurality of suspension elements 13 being interconnected via longitudinal connecting elements 15 which thereby ensure a closed loop 15a of interrelated suspension elements. The suspension elements 13 are coupled to the respective circumferential tracks 12a, 12b via the first and second pulleys 13.1, 13.2.

In the embodiment shown in Fig. 2, the first and second pulleys 13.1, 13.2 are arranged on opposite lateral sides of the respective suspension element 13. Thus, the closed loop 15a of interrelated suspension elements is arranged between the first and second tracks 12a, 12b which extend on both lateral sides of the closed loop 15a.

The tracks 12a, 12b can be made of any kind of rail guide system components, in particular including at least one chain, belt, cable or the like traction or transmission means. The tracks 12a, 12b may comprise different guide/rail sections coupled together, each exhibiting a different radius of curvature or being linear. Also, the tracks 12a, 12b can be formed/made by on single continuous/coherent rail.

**Fig. 3A, 3B, 3C** show some more details of the suspension elements 13 and the connecting elements 15. E.g., the connecting elements 15 are coupled to the lever arm 13.5 at the axis X13.1 if the first pulley 13.1, thereby facilitating pivot motion about that axis (resp. around the respective instantaneous centre of rotation Cr).

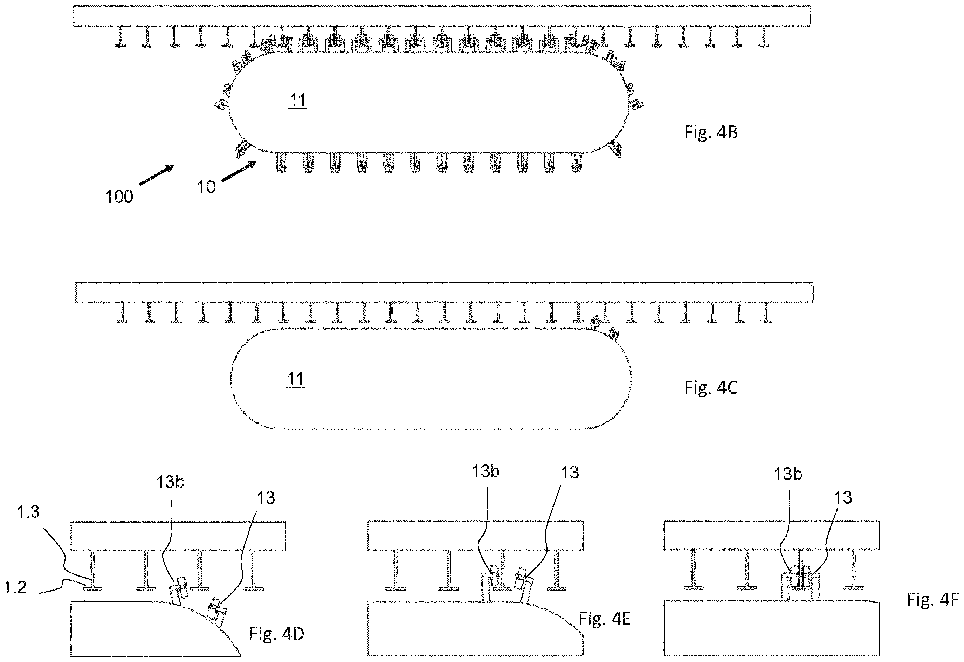

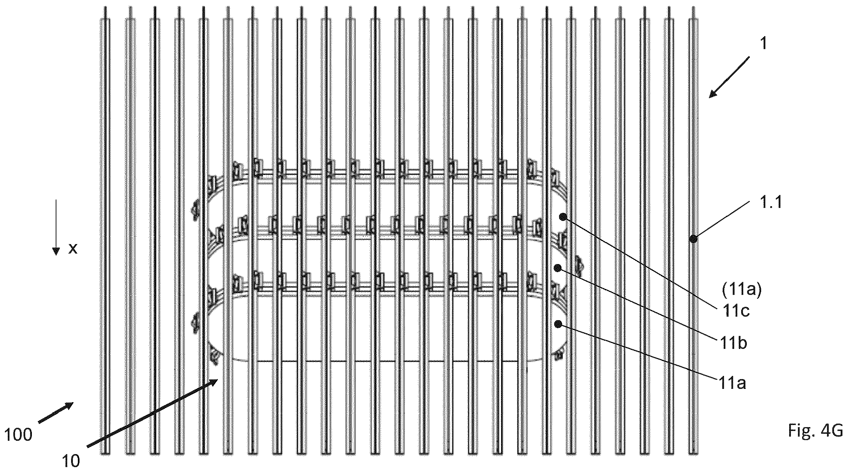

**Fig. 4A****,** **4B, 4C, 4D****,** **4E, 4F****,** **4G** show an embodiment of a vehicle 10 exhibiting three first drive units 11a, 11b, 11c which can be interrelated/connected e.g. via cross-beams or the like. In contrast to the configuration at the first drive unit 11a, the suspension elements 13b of the further first drive unit 11b are arranged in mirror-inverted manner, but the suspension elements 13 of the further first drive unit 11c are arranged in the same manner as the suspension elements 13 of the first drive unit 11a. As can be seen in Fig. 4E, 4F, that configuration allows for a very good security and stability level (both types of suspension elements 13, 13b are guided along the T-profiles, but on different lateral sides of the T-profiles). Alternatively, the vehicle 10 may only comprise two first drive units 11a, 11b.

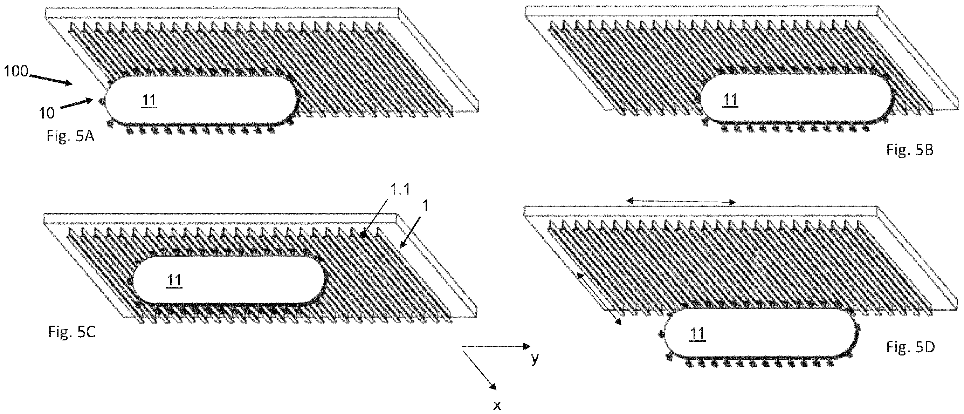

**Fig. 5A, 5B, 5C, 5D** show different kinds of traveling motions which can be effected by means of the vehicle 10 described herein. As already described further above, the present invention allows for two-dimensional traveling motion both in a first spatial direction (x) corresponding to the longitudinal direction/extension of the T-profiles 1.1 (dashed line arrow), and in a second spatial direction (y) corresponding to the driving direction resp. to the direction/extension of the tracks (dotted line arrow).

It should be mentioned that the T-profiles shown in the figures may also be provided as other kinds of profile rails; i.e., the inventive mechanism/kinematics is/are not limited to use of T-profiles only; rather, the skilled person is aware of the fact that also other profiles offering adequate suspension for the suspension elements and optionally also a guiding track to the wheels can be used.

In the following, further aspects/details of embodiments of the present invention are described in more detail. For any reference signs or elements/components or aspects not explicitly mentioned/described, it is referred to above mentioned embodiments, respectively. The embodiments described in the following passages exhibit a first drive unit comprising a chain drive, and the first circumferential track comprises a chain (with a closed loop of interrelated chain elements arranging the corresponding suspension elements and optionally also arranging counter bearing elements), and the longitudinal connecting elements of that first drive unit are provided in the form of chain elements.

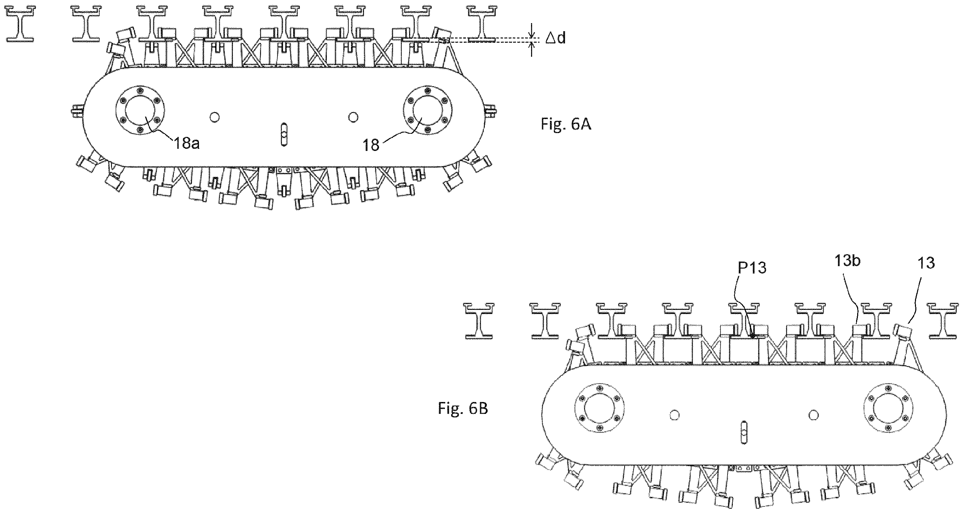

**Figure 6A** shows a vehicle exhibiting means for avoiding any relative motion of the vehicle with respect to the structure (full suspension especially also in view of any relative motion orthogonally/normally with respect to the structure), and **Figure 6B** shows a configuration which at least ensures secure suspension in view of vertical forces of inertia and lateral forces (suspension devoid of counter bearings).

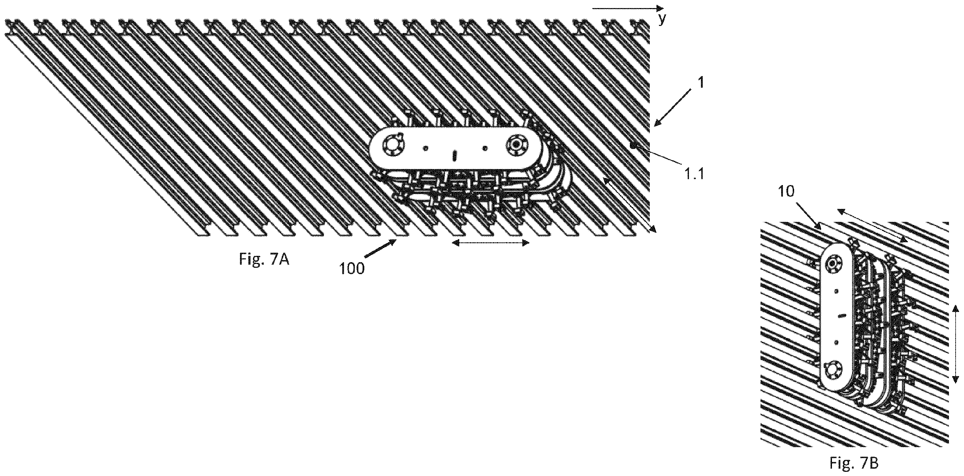

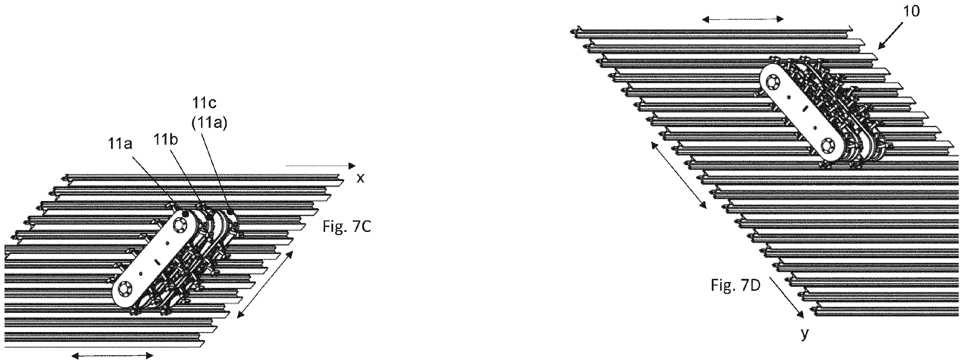

**Figures 7A, 7B****,** **7C, 7D** illustrate a ceiling vehicle arrangement 100 comprising a ceiling vehicle 10 exhibiting three drive units 11a, 11b, 11c. As already described further above, the present invention allows for two-dimensional traveling motion both in a first spatial direction corresponding to the longitudinal direction/extension of the T-profiles 1.1 (dashed line arrow), and in a second spatial direction corresponding to the driving direction resp. to the direction/extension of the tracks (dotted line arrow). Depending on the orientation of the structure / T-profiles 1.1, the first and/or second spatial direction may also comprise a vertical (z-)component, as illustrated in Fig. 7C, 7D (inclined plane / level).

Therein, coordinates x, y shown in the figures in context with inclined planes refer to the longitudinal extension (x) of the (ceiling) structure.

The vehicle 10 shown in Fig. 7A is suspended/hanging at a ceiling structure. Nonetheless, the vehicle 10 may also be suspended in a similar structure being arranged on the ground or at the wall. The vehicle is not necessarily provided in the form of a ceiling vehicle; rather, Fig. 7A illustrated an application/use at a ceiling structure. Same applies for any further figure of the present disclosure illustrating an application/use at a ceiling structure only as an example.

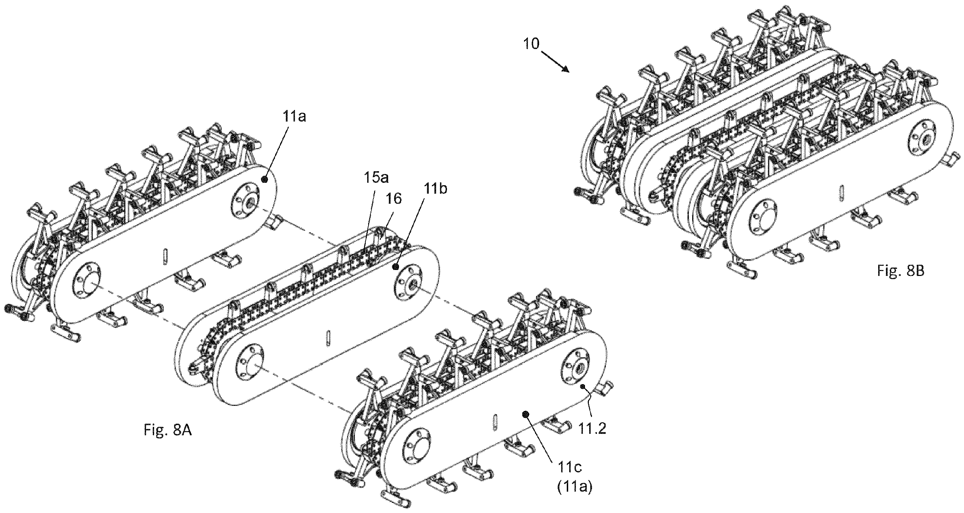

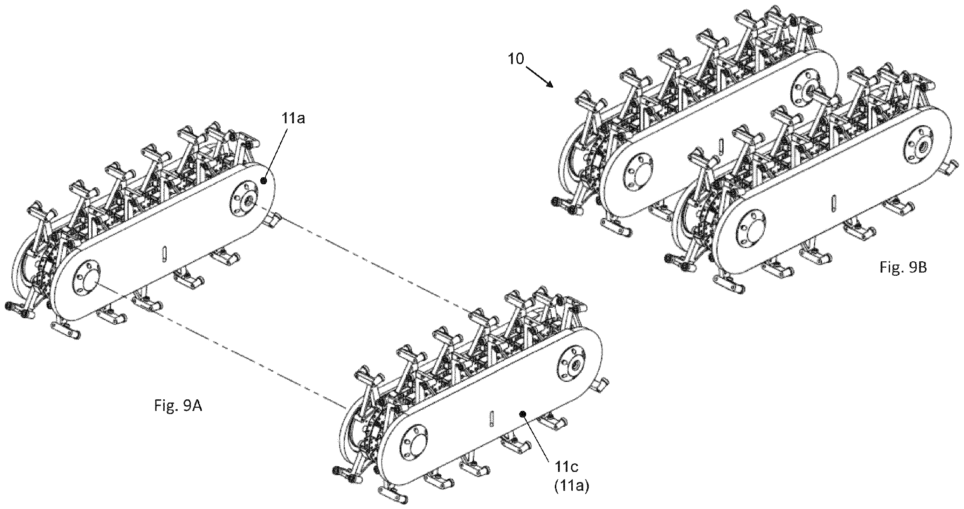

**Figures 8A, 8B** show some more details of a ceiling vehicle 10 exhibiting three first drive units 11a, 11b, 11c arranged laterally with respect to each other, wherein one of the further first drive units 11b arranged there between (in the middle) does not exhibit any suspension elements but counter bearings 16, and **Figures 9A, 9B** show some more details of a ceiling vehicle 10 exhibiting two first drive units 11a, 11c (each without counter bearing). In the embodiment shown in Fig. 8, the further first drive unit 11b provides for counter bearings 16 which are coupled to the chain 15a, i.e., the first circumferential track provides for positioning and motion of the counter bearings 16. It should be noted that in the embodiment shown in the figures, these counter bearings 16 are intended for interfering with the structure only at a face side, and therefore, no decoupling kinematics are provided in context with these counter bearings 16. Therefore, there is no need for provision of any further second circumferential track at/for the further first drive unit 11b arranged in the middle. Thus, in this embodiment, the further first drive unit 11b arranged in the middle and accommodating (only) the counter bearings only exhibits a/the first circumferential track.

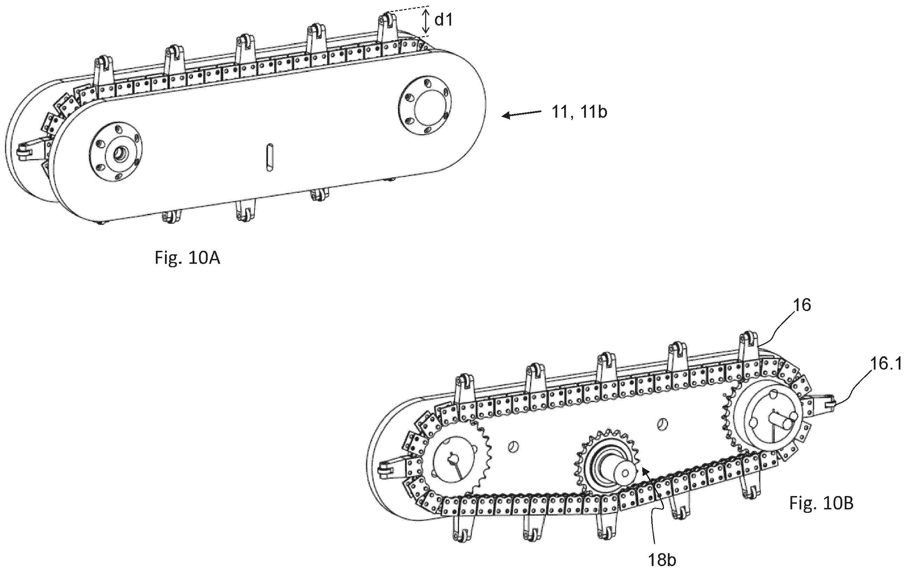

**Figures 10A, 10B** show some details of a first drive unit 11, 11b only accommodating counter bearings but no suspension elements.

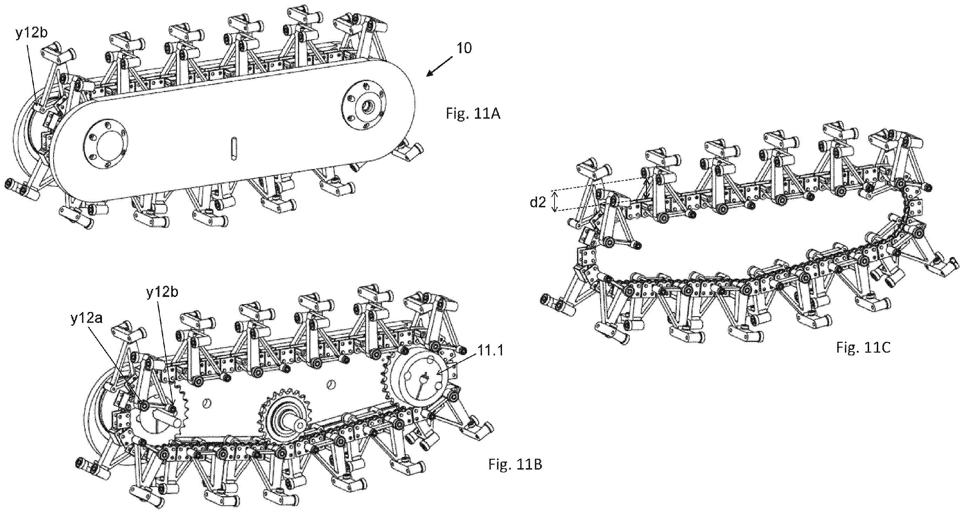

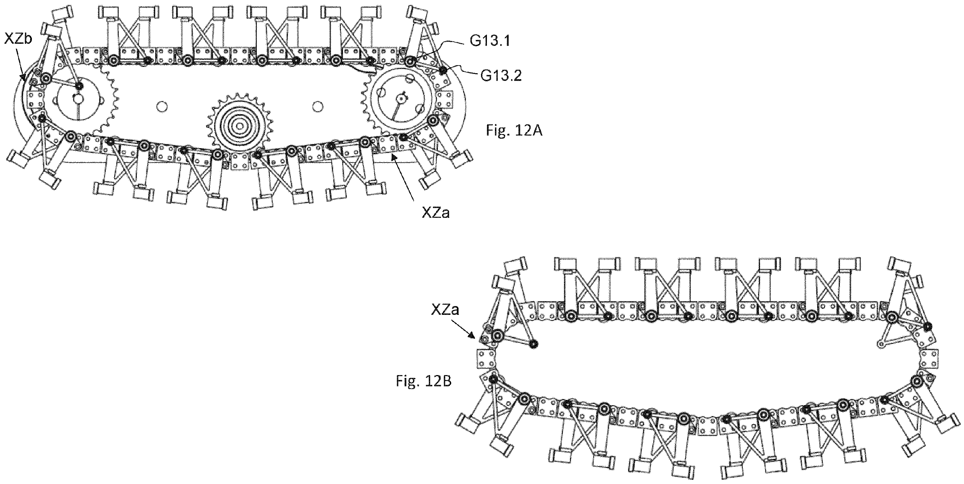

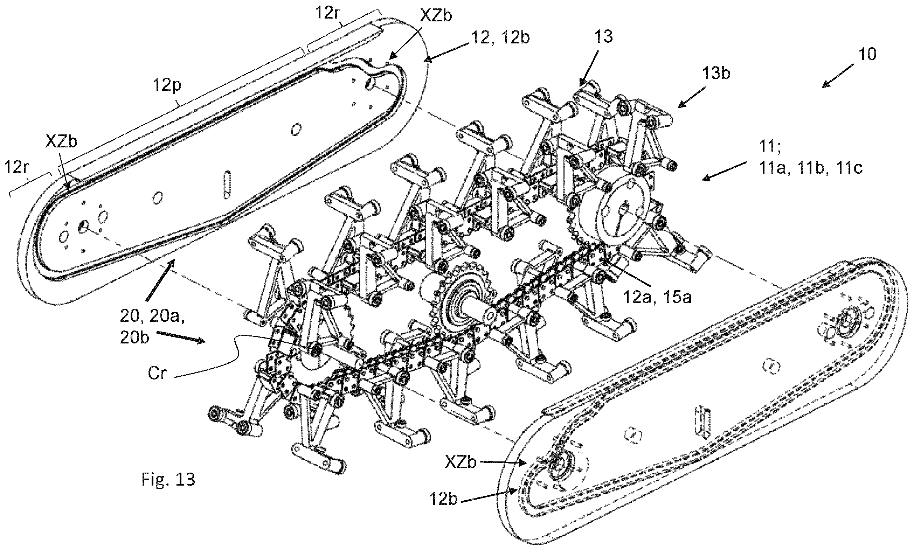

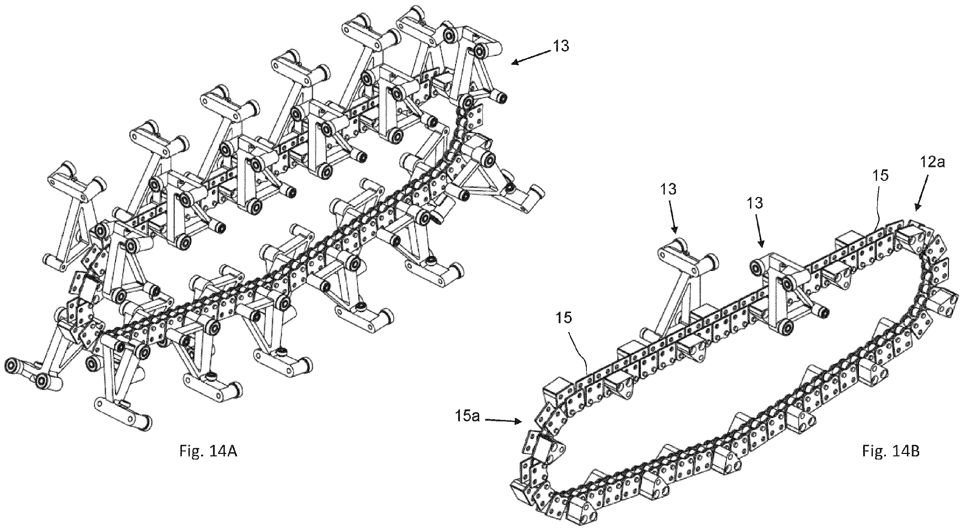

**Figures 11A, 11B, 11C** and **Figures 12A, 12B** and **Figure 13** and **Figures 14A**, 14B show some kinematic aspects of first drive units accommodating / arranging / guiding both suspension elements 13 and further suspension elements 13b. Fig. 13 also illustrates that one (each) first drive unit 11 may comprise the first circumferential track (here: provided/defined by the chain 15a) and two second circumferential tracks 12b, wherein these two second circumferential tracks 12b are arranged asymmetrically, i.e., the shape/contour XZb is asymmetrical. Such an arrangement also allows for providing de-/coupling kinematics for both a plurality of suspension elements 13 and a plurality of further suspension elements 13b, especially in such a manner that both types of suspension elements 13, 13b may interact and engage in the same (but asymmetrical) manner with the structure 1, especially at the same profile rail at opposite lateral sides, respectively. Such an arrangement may also ensure a high security and stability level already by means of one single first drive unit 11. Thus, scaling (two, three or even more) of the first drive units is realizable in even more flexible manner, and individual arrangements can be optimized for each application.

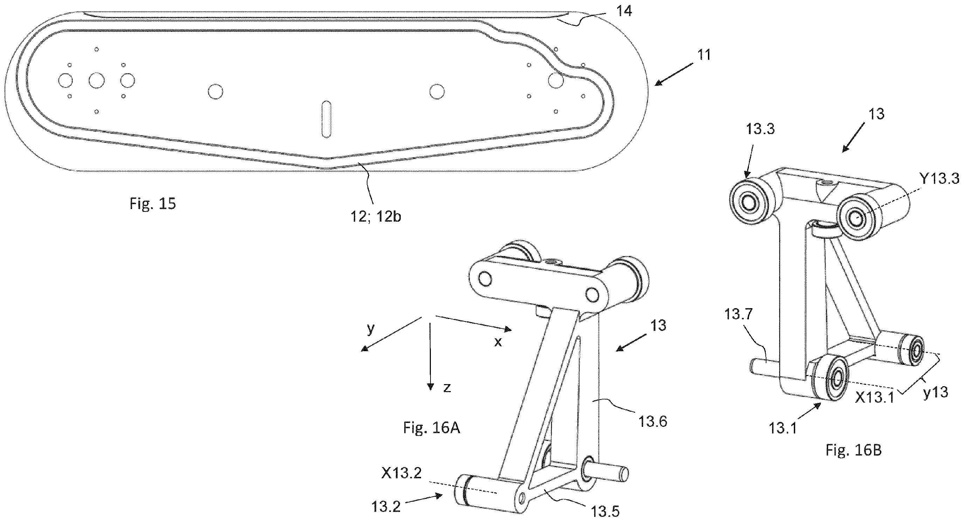

It should be noted that the first circumferential track resp. a/the chain may/can provide for guiding and driving both the suspension elements 13 and the further suspension elements 13b; both types of suspension elements 13, 13b can be coupled, e.g., via a protruding axial section (guiding bolt or shaft) 13.7 to the chain structure (cf. Fig. 16B) which protrudes vis-à-vis of the first pulley 13.1, especially along its axis X13.1. In particular, the suspension elements 13 and the further suspension elements 13b are arranged with longitudinal offset (y) and mirror-inverted on both sides of the chain 15a. In particular, the longitudinal distance (y) of the respective suspension element 13 and the respective further suspension element 13b of a respective pair of suspension elements 13, 13b corresponds to the extension in cross direction (y) of each element/profile of the (ceiling) structure.

**Figure 15** also shows a guiding plank or rail 14 allowing for guiding the first circumferential track resp. the chain more precisely.

**Figures 16A, 16B** show a further embodiment of suspension elements 13, wherein in comparison with the suspension elements described above in context with Fig. 3, these suspension elements exhibit two wheels or pulleys 13.3 arranged and configured for interacting with the structure 1, and these suspension elements may also exhibit a further pulley which is suspended around an axis extending in the z-direction (as shown in Fig. 16B). That optional further pulley may ensure further/improved support and guiding with respect to the structure.

In **Fig. 6A****,** **10A****,** **11C****,** a contact point distance Δd provided by different protruding distances d1, d2 of the suspension element's contact point P13 and of the counter bearing's contact point (free end, especially wheel/pulley) is illustrated by referring to the relative arrangement at the (ceiling) structure, respectively.

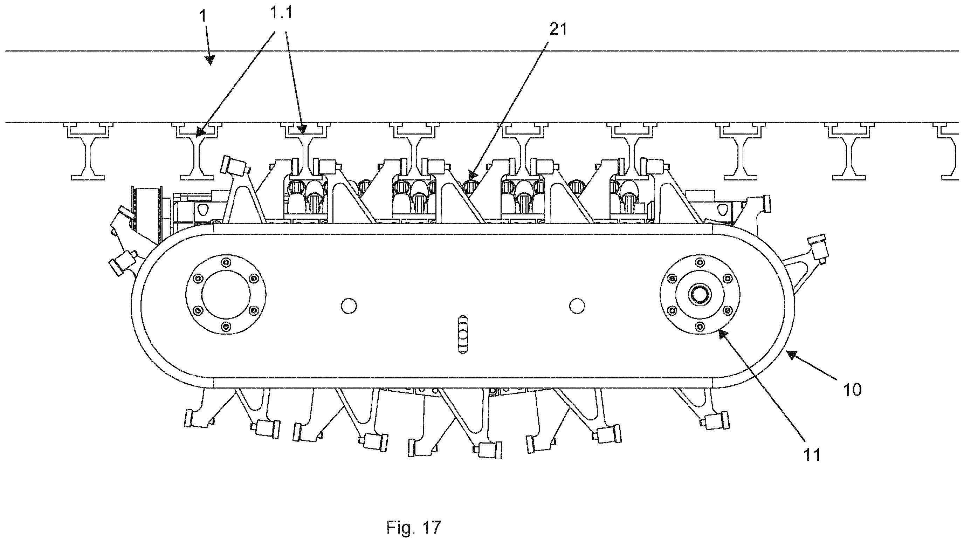

**Figure 17** shows a side view of an embodiment of a ceiling vehicle 10 hanging in a structure 1 according to the invention. The ceiling vehicle 10 is coupled to the structure 1 via its suspension elements 13, as described in Fig. 6A and 6B. Additionally, a holonomic wheelset 21.2 consisting of a plurality of coaxially aligned holonomic wheels 21.1 can be seen. The holonomic wheels exhibit a plurality of equally distributed rollers around their circumference, which allow them to move passively in the direction of the first drive units and allow active traveling in the second direction when they are actively rotated along the axis of the holonomic wheelset 21.2.

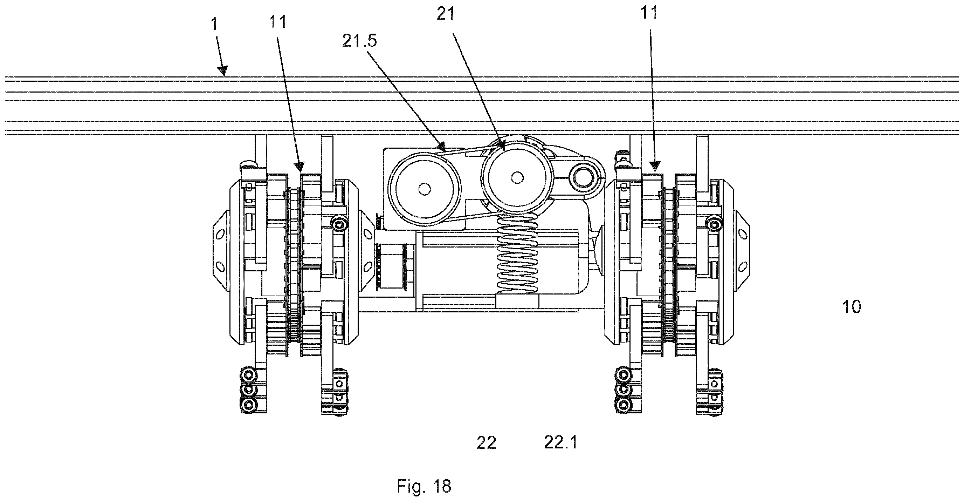

A front view of the ceiling vehicle 10 can be seen in **Figure 18****.** The ceiling vehicle 10 comprises a return mechanism 22 with a spring 22.1 that pushes the holonomic wheelset 21.2 against the structure 1 to ensure a good traction. A motor 27 powering the second drive unit and holonomic wheel 21.1 can also be seen.

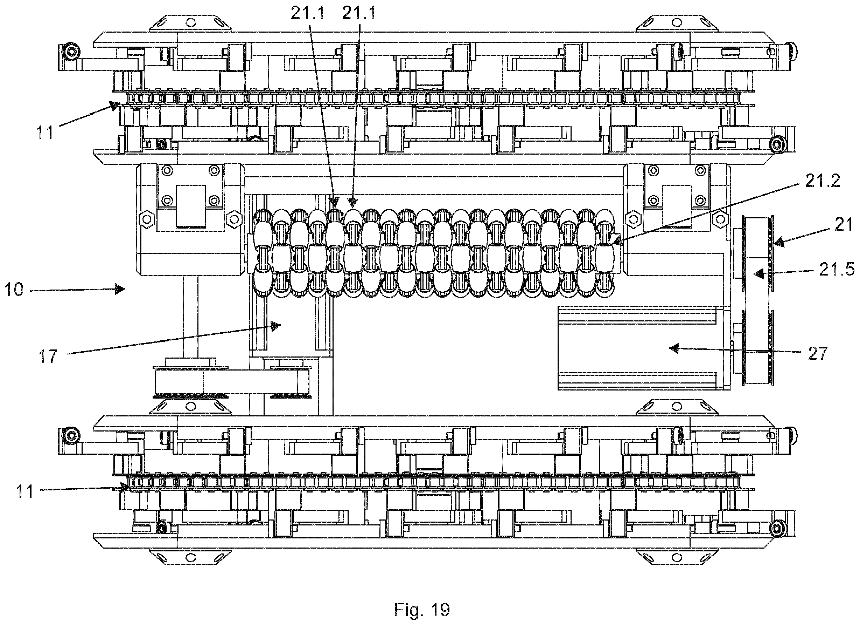

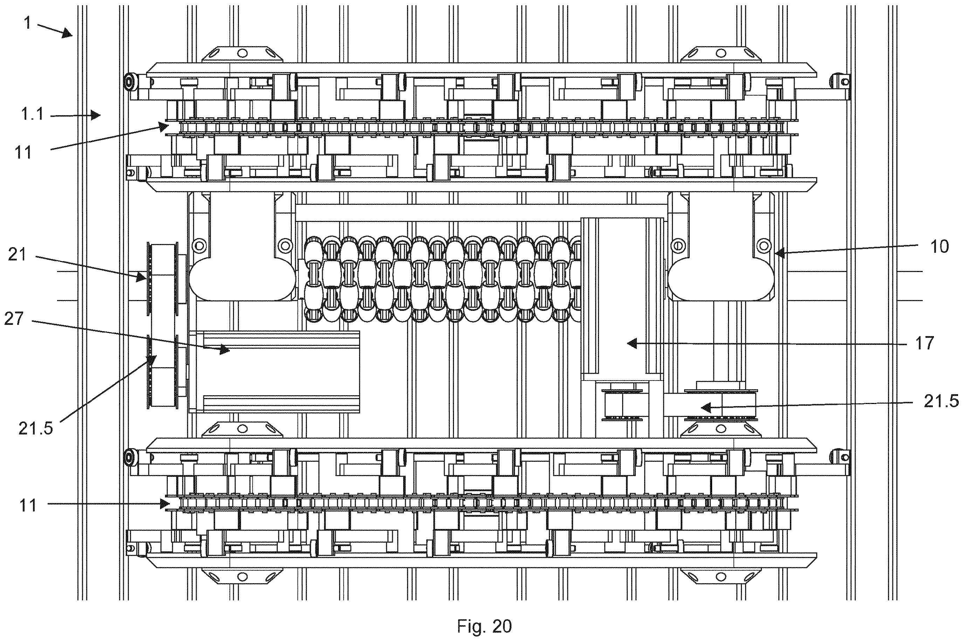

**Figure 19** shows a top view of the ceiling vehicle 10. A first motor 17 connected to the first drive units 11, as well as a second motor 27 connected to the second drive unit 21 and the holonomic wheel 21.1, are shown. The two motors 17, 27 can be controlled individually via a control unit, such that the ceiling vehicle 10 is configured for omnidirectional movement along the structure 1. A bottom view of the ceiling vehicle 10 is shown in **Figure 20****.**

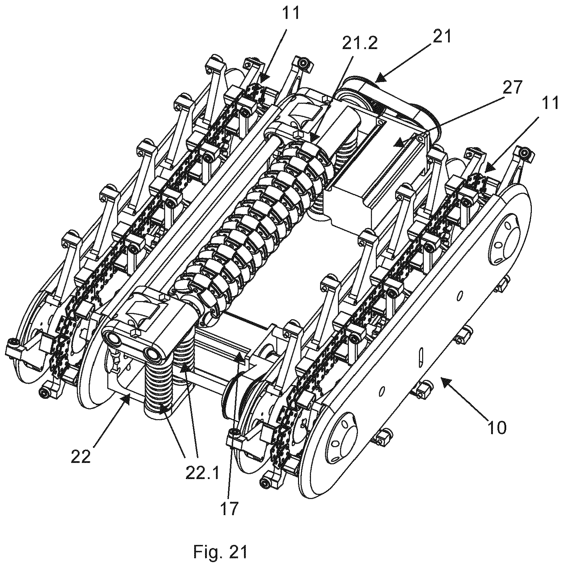

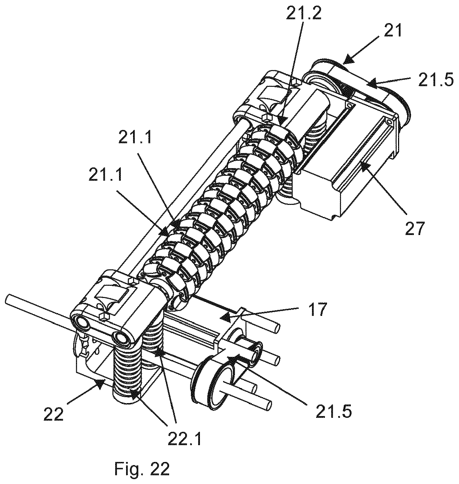

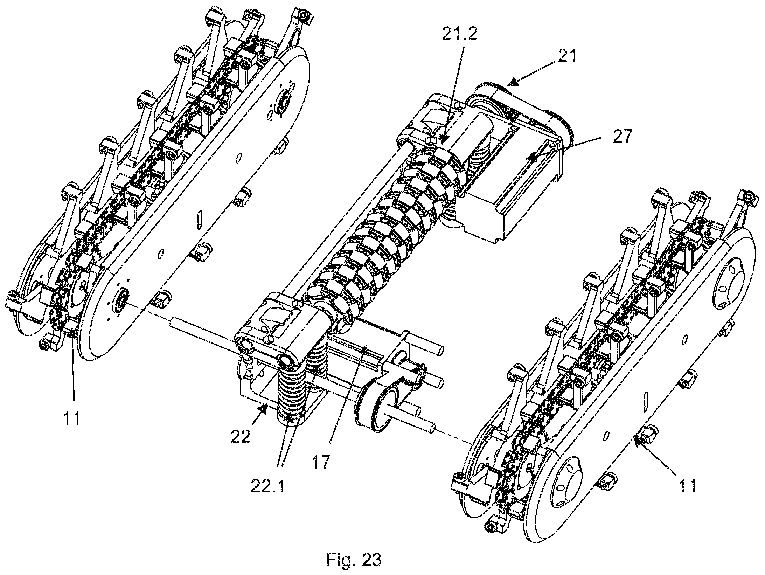

With **Figures 21****,** **22****,** and **23** the configuration of the ceiling vehicle 10 is described. The ceiling vehicle 10 comprises two first drive units and a second drive unit 21 configured for enabling locomotion of the ceiling vehicle 10. The second drive unit 21 with the holonomic wheel 21.1 is shown in Fig. 22. The first motor 17 is shown below the holonomic wheel 21.1 and is connected to the belt 21.5 to drive the first drive units 11. The second motor 27 is arranged in parallel to the holonomic wheel 21.1 and connected to it via a second belt 21.5. The return mechanism 22 ensures grip of the holonomic wheel 21.1 with the structure 1. The vehicle 10 is able to actively move in two spatial directions, the first spatial direction being predefined by the structure 1 and a second spatial direction being defined by the guiding/driving motion of the two first drive units. The exploded view in Fig. 23 shows how the components are connected.

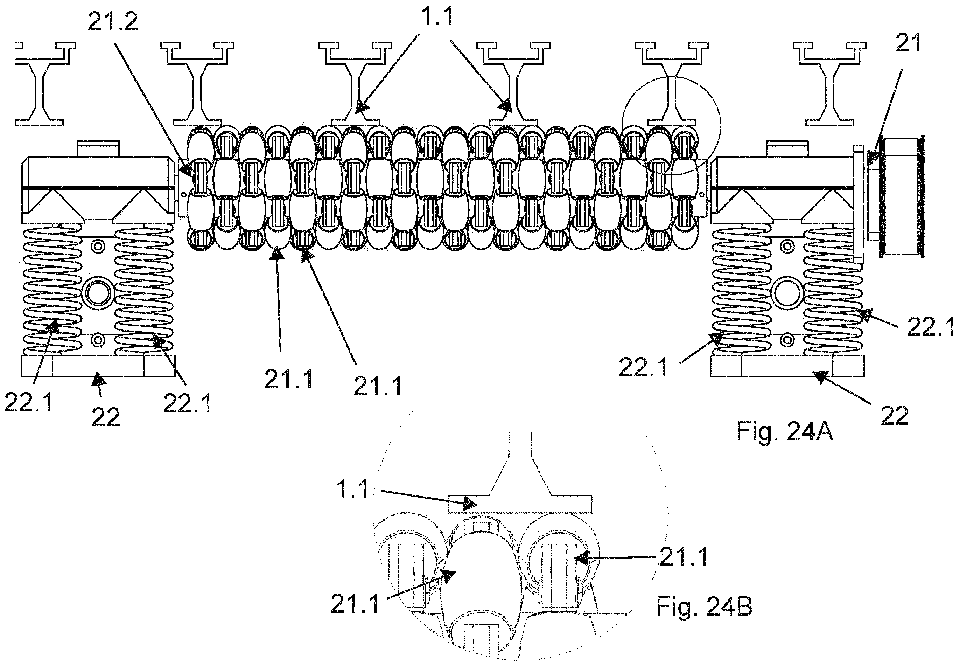

**Figures 24A** and **24B** shows the holonomic wheel 21.1 in contact with the structure 1. The contact is enhanced by the return mechanism 22 on both ends of the holonomic wheel 21.1. The close up view in Fig. 24B shows the preferred configuration in which at least two holonomic wheel 21.1 of the holonomic wheel 21.1 are in contact with the T-profile 1.1 of the structure 1. Additionally, each holonomic wheel 21.1 has an offset in azimuthal direction in relation to its adjacent holonomic wheels 21.1.

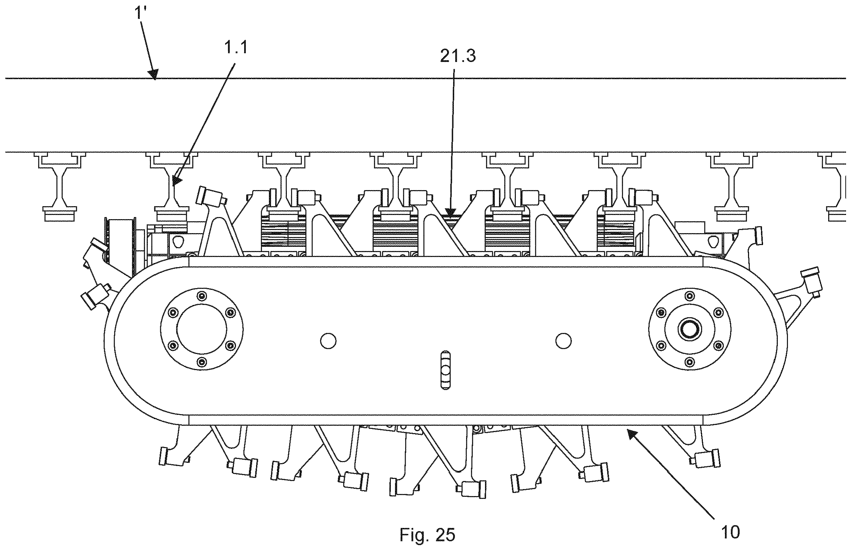

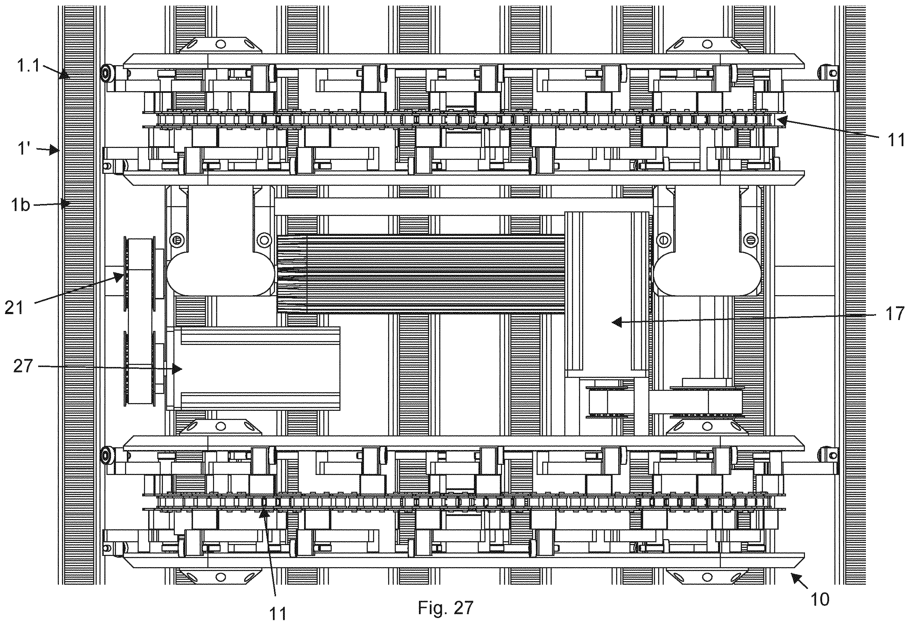

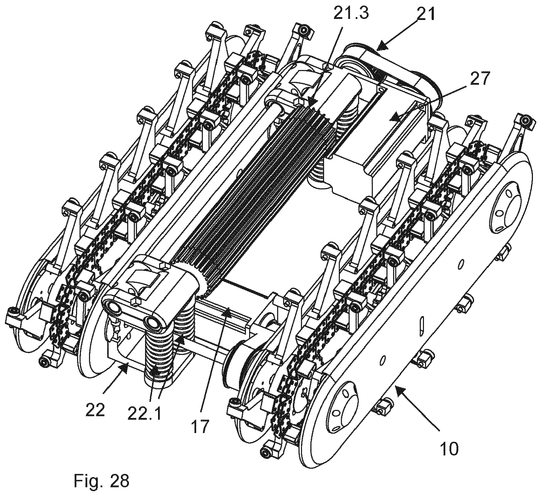

**Figures 25****,** **26****,** **27****,** and **28** show a vehicle 10 according to a further embodiment, wherein the second drive unit 21 comprises an elongated gearing wheel 21.3, or spur gear, for form fit coupling with a structure 1'. The structure 1' exhibits an additional raster 1b on the bottom side of the T-profiles 1.1. Preferably, the spur gear 21.3 is fixed at a predefined height. However, an optional return mechanism 22 is also shown. The bottom side of the T-profiles 1.1 is depicted in Fig. 27. The additional raster 1b corresponds to the teeth of the spur gear 21.3. The vehicle 10 also has two motors 17, 27 for actively driving in two directions: a first motor 17 for driving the first drive units 11 and moving the vehicle 10 orthogonal to the structure 1', and a second motor 27 for driving the second drive unit and moving the vehicle 10 along the T-profiles 1.1.

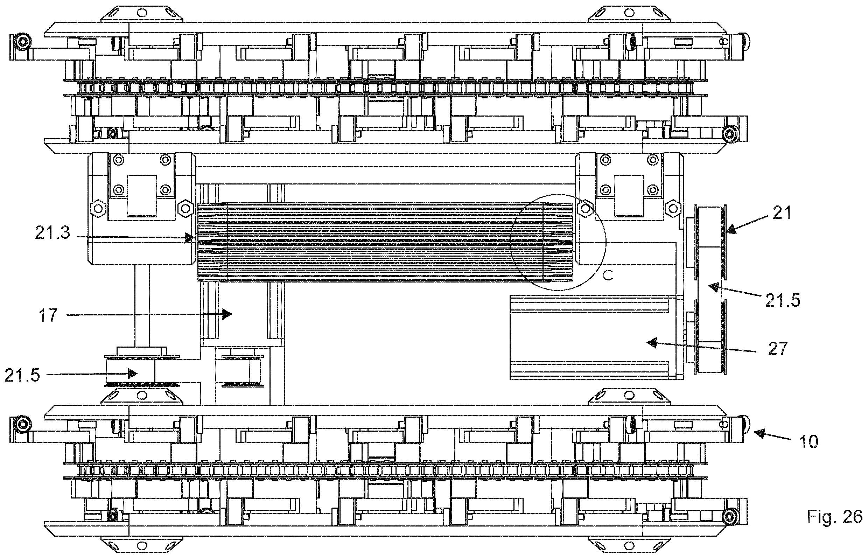

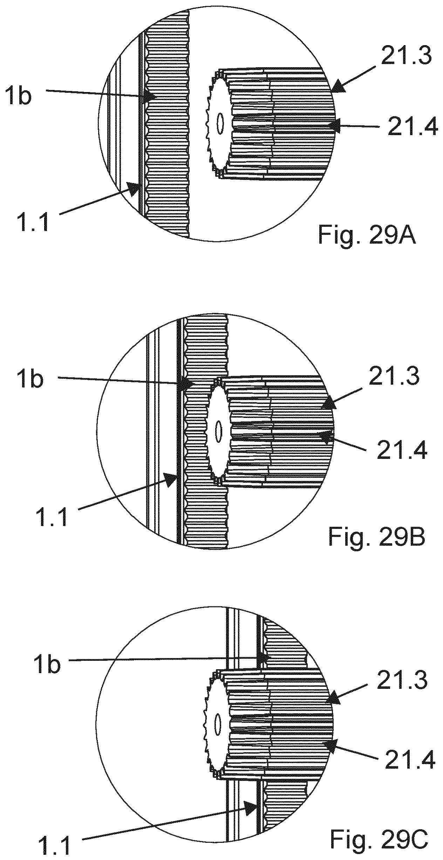

When the vehicle 10 moves orthogonal to the structure 1' (in the second spatial direction) the teeth 21.4 of the spur gear 21.3 slide into / out of the additional raster 1b of the structure 1'. In **Figures 29A, 29B,** and **29C****,** the section C in Fig. 26 is enlarged and the process of sliding into the additional raster 1b is depicted. The teeth 21.4 are tapered at the ends to allow a smooth transition into the additional raster 1b.

The embodiments shown here are only examples of the present invention and must therefore not be understood as limiting. Alternative embodiments contemplated by the skilled person are equally encompassed by the scope of protection of the present invention.

### List of reference signs

- 1: structure, e.g. ceiling structure
- 1': structure, e.g. ceiling structure
- 1a: raster defined by the structure
- 1b: additional raster
- 1.1: profile rail, especially T-profile resp. T-rail
- 1.2: wheel tread
- 1.3: power rail
- 10: vehicle, especially ceiling vehicle
- 11: first drive unit (especially crawler track-like)
- 11.1: drive mechanism
- 11.2: lateral area resp. surface shell of the drive unit(s)
- 11a: first drive unit, especially chain drive unit
- 11b: further first drive unit
- 11c: further first drive unit
- 12: circumferential track
- 12a: first circumferential track, especially comprising a chain
- 12b: second circumferential track
- 12p: parallel section / linear section of the track
- 12r: redirection section / curved section of the track
- 13: suspension element resp. chain element
- 13b: further suspension element
- 13.1, 13.2: first pulley, second pulley
- 13.3: wheel
- 13.4: current collector resp. power-slider (conductive slider for energy transfer)
- 13.5: lever arm
- 13.6: protruding section / suspension arm
- 13.7: protruding axial section (guiding bolt or shaft)
- 14: guiding plank or rail
- 15: longitudinal connecting element, especially chain element
- 15a: closed loop of interrelated suspension elements, especially chain
- 16: counter bearing
- 16.1: wheel, pulley
- 17: first motor or actuator
- 18: gear unit
- 18a: further gear unit
- 18b: chain tensioning device
- 19: energy storage unit
- 20: de-/coupling kinematics
- 20a: vertical motion kinematics
- 20b: non-circular pivot motion kinematics
- 21: second drive unit
- 21.1: holonomic wheel
- 21.2: holonomic wheelset
- 21.3: spur gear
- 21.4: teeth
- 21.5: belt
- 22: return mechanism
- 22.1: spring
- 27: second motor
- 30: control unit
- 40: sensor arrangement
- 50: hoist unit
- 51: traction mechanism, especially rope winch
- 53: transmission means, especially rope
- 100: crawler type (ceiling) vehicle arrangement
- Cr: instantaneous centre of rotation
- d1: protruding distance of the suspension element's contact point
- d2: protruding distance of a/the counter bearing's contact point
- Δd: contact point distance
- G13.1: first guiding point or axis (coupling the first track and the suspension element)
- G13.2: second guiding point or axis (coupling the second track and the suspension element)
- P13: contacting/bearing point/area of the suspension element with the ceiling structure
- X13.1: first pulley axis
- X13.2: second pulley axis
- XZa: shape/contour of the first circumferential track
- XZb: shape/contour of the second circumferential track
- Y13.3: wheel axis
- y12a: predefined first longitudinal positions
- y12b: predefined second longitudinal positions
- y13: longitudinal extension of lever arm
- x: first spatial direction, especially direction of longitudinal extension of T-profiles
- y: second spatial direction, especially longitudinal direction or driving direction
- z: third spatial direction, especially vertical direction

## Claims

1. Crawler type vehicle (10) configured for traveling in a suspended manner, especially headlong at a ceiling structure (1), wherein the vehicle (10) exhibits:
- a plurality of suspension elements (13, 13b) configured for suspending the vehicle (10) and configured for coupling the vehicle (10) to the structure (1),
- at least one first drive unit (11, 11a, 11b, 11c) configured for circumferential motion and accommodating a first circumferential track (12a) and a second circumferential track (12b) having a different circumferential shape/contour than the first circumferential track, wherein the suspension elements (13, 13b) are attached to the first circumferential track (12a) at predefined first longitudinal positions corresponding to a predefined raster, wherein the vehicle (10) is configured for moving along the structure (1) by decoupling a subset of the plurality of suspension elements (13, 13b) from resp. coupling them into the structure (1) when the suspension elements (13, 13b) are guided along the two circumferential tracks (12, 12a, 12b) by the circumferential motion.

2. Crawler type vehicle (10) according to claim 1, wherein the vehicle further comprises:
- at least one second drive unit (21) configured for enabling locomotion of the ceiling vehicle (10) in at least two spatial directions, namely a first spatial direction being predefined by the structure (1) and a second spatial direction being defined by the guiding/driving motion of the at least one first drive unit (11), wherein the second spatial direction is orthogonal to the first spatial direction, wherein the second drive unit (21) is configured for locomotion of the vehicle (10) in the first spatial direction providing for at least two-dimensional locomotion capability of the vehicle (10), wherein the respective suspension element 13 exhibits at least one wheel () which is arranged and configured for being guided along the structure (1), especially on a wheel tread of a respective/corresponding profile of the structure,
- at least two individually controllable motors (17, 27), wherein at least one first drive unit (11) and at least one second drive unit (21) is connected to at least one motor (17, 27), and wherein the motor (17, 27) for the first drive unit(s) (11) and the second drive units (21) are different, providing for active two-dimensional traveling capability of the vehicle.

3. Crawler type vehicle (10) according to claim 1 or 2, wherein the at least one first drive unit (11, 11a, 11b, 11c) of the crawler type vehicle (10) is configured for enabling a closed loop trajectory of the suspension elements (13, 13b);
wherein the first and second circumferential tracks (12a, 12b) are shaped in such a manner that the suspension elements (13, 13b) are de-/coupled from/into the structure (1) only when passing a curved section of the tracks;
wherein the suspension elements (13, 13b) are fixedly attached/coupled by means of a first pulley to/with the first circumferential track (12a), wherein the suspension elements (13, 13b) are guided within the second circumferential track (12b) by means of a second pulley respectively, wherein the first and second pulley preferably are arranged at a lever arm of the respective suspension element, wherein the respective suspension element preferably has an L-shape; and/or wherein each suspension element exhibits a first pulley and a second pulley arranged in longitudinal distance with respect to the first pulley at a lever arm of the respective suspension element, wherein the suspension element is coupled to the first and second tracks via the first and second pulleys; and/or wherein each suspension element exhibits a lever arm accommodating/supporting a/the pulley guided by the second track, wherein the pulley is arranged at a free end of the lever arm, and wherein in a linear section of the track, the lever arm is pointing in the driving/traveling direction, at least roughly; and/or wherein the suspension elements (13, 13b) are connected to each other by means of longitudinal connecting elements, especially by longitudinal connecting elements being connected at the axis of a/the first pulley of the respective suspension element, thereby forming a closed loop of interrelated suspension elements (13, 13b) distanced to each other in the predefined raster;
wherein the first circumferential track (12a) exhibits a chain or is provided/defined by a chain forming a closed loop of interrelated chain elements connecting the suspension elements (13, 13b), wherein the vehicle (10) exhibits a plurality of counter bearings, especially configured and arranged for frontally interacting with the ceiling structure (1), wherein the plurality of counter bearings are preferably coupled to/with the first circumferential track (12a), especially coupled to chain elements of the first circumferential track;
wherein the vehicle (10) exhibits a further first drive unit accommodating further circumferential tracks (12a, 12b), wherein a plurality of further suspension elements (13b) are attached to the further circumferential tracks in predefined longitudinal positions corresponding to a/the predefined raster and are configured for suspending the vehicle (10) and for coupling the vehicle (10) to the structure, especially such that the vehicle (10) is secured with respect to opposite directions at the structure, wherein the vehicle (10) exhibits further suspension elements (13b) which are attached to further circumferential tracks (12a, 12b), wherein the suspension elements (13) and the further suspension elements (13b) momentarily engaging the structure (1) are securing/blocking the vehicle (10) at the structure (1) with respect to the driving/traveling direction and opposite thereto, and/or wherein the vehicle (10) exhibits a further drive unit which exhibits the same configuration as a/the first drive unit but with mirror-inverted arrangement of the further suspension elements (13b) and further circumferential tracks (12, 12a, 12b), wherein the further suspension elements (13b) are guided/driven in a direction opposite to the guiding direction of the suspension elements (13) of the first drive unit, especially such that both the respective suspension elements (13) and further suspension elements (13b) are simultaneously de-/coupling to/from the structure;
wherein the at least one first drive unit is configured for lifting the respective suspension element out of the structure (1) in an unloaded state, especially such that the at least one first drive unit provides for both de-/coupling kinematics for a subset of momentarily unloaded suspension elements (13, 13b) and suspension of the vehicle (10) by a subset of momentarily loaded suspension elements (13, 13b) at the same time; and/or wherein the at least one first drive unit has a substantially plane configuration; and/or wherein the vehicle (10) exhibits at least two first drive units arranged in parallel to each other; and/or wherein the circumferential tracks (12a, 12b) are respectively guided/driven in a plane, extending in two-dimensional manner; and/or wherein the at least one first drive unit is coupled by means of at least three suspension elements (13, 13b); and/or wherein the respective suspension element has an L-shape which provides for two arms defining the relative arrangement of a/the wheel and first and second pulleys of the respective suspension element.

4. Crawler type vehicle (10) according to claim 1, 2 or 3, wherein the second drive unit (21) comprises at least one holonomic wheel (21.1).

5. Crawler type vehicle (10) according to claim 4, wherein the holonomic wheel is disc shaped and comprises a plurality of equally distributed rollers around its circumference.

6. Crawler type vehicle (10) according to claim 5, wherein the second drive unit (21) comprises a holonomic wheelset (21.2) consisting of at least two coaxially arranged holonomic wheels (21.1).

7. Crawler type vehicle (10) according to claim 6, wherein each of the coaxially arranged holonomic wheels (21.1) has a predefined offset in the azimuthal direction in respect to their adjacent holonomic wheels (21.1).

8. Crawler type vehicle (10) according to one of claim 4 to 7, wherein the holonomic wheel(s) () is/are connected to a return mechanism (22) that applies a force to the holonomic wheel(s) (21.1) pressing it/them against the structure (1).

9. Crawler type vehicle (10) according to claim 1, 2 or 3, wherein the second drive unit (21) comprises at least one wide elongated gearing wheel (21.3) for meshing with a defined raster (1b) in the second spatial direction.

10. Crawler type vehicle (10) according to claim 8, wherein the elongated gearing wheel (21.3) is tapered at the ends.

11. Crawler type vehicle arrangement (100) comprising at least one crawler type vehicle (10) according to any of claims 1 to 8 and a/the structure (1) exhibiting a plurality of profiles defining a/the raster of the structure, wherein the suspension elements (13, 13b) are configured for being guided along the profiles in a first spatial direction being defined by the structure, the vehicle's traveling motion having at least two degrees of freedom; and/or wherein the structure (1) exhibits a plurality of profiles defining a/the raster of the structure, wherein the vehicle (10) exhibits a plurality of further suspension elements (13b) suspending the vehicle (10) together with the suspension elements (13), wherein the suspension elements (13) and the further suspension elements (13b) secure/block the vehicle (10) at the structure (1) with respect to the driving/traveling direction.

12. Crawler type vehicle arrangement (100) comprising at least one crawler type vehicle (10) according to claim 9 or 10 and a structure (1') exhibiting a plurality of first profiles defining a raster of the structure in a first spatial direction, wherein the plurality of profiles each exhibit second profiles defining a raster of the structure in a second spatial direction, wherein the suspension elements (13, 13b) are configured for being guided along the first profiles in the first spatial direction being defined by the structure, the vehicle's traveling motion having at least two degrees of freedom, and wherein the gearing wheel is configured for meshing with the second profiles, such that the crawler type vehicle (10) can move omnidirectionally via the at least two individually controllable motors (17, 27) and drive units (11, 21).

13. Method of hanging/suspending a crawler type vehicle (10) at/from a structure (1) for traveling in a suspended manner headlong the structure, especially a crawler type vehicle (10) according to one of claims 1 to 10, wherein the vehicle (10) is suspended by means of a plurality of suspension elements (13, 13b) coupling the vehicle (10) to the structure, wherein a circumferential guiding/driving motion is defined by first and second circumferential tracks (12a, 12b) having a different circumferential shape/contour, wherein the suspension elements (13, 13b) are attached to the first circumferential track at predefined first longitudinal positions corresponding to a raster defined by the structure, wherein the vehicle (10) is suspended such that it can move along the structure (1) by decoupling a subset of the plurality of suspension elements (13, 13b) from resp. coupling them into the structure (1) when the suspension elements (13, 13b) are guided along the circumferential tracks (12a, 12b) by the circumferential motion, wherein the circumferential motion is transmitted/transferred by the suspension elements (13, 13b) momentarily engaging the structure; and/or wherein the circumferential motion is provided by first drive units (11a, 11b), wherein at least two motors power the at least one first drive unit and at least one second drive unit enabling active two-dimensional travel of the crawler type vehicle (10).

14. Computer program comprising instructions which, when the program is executed by a computer, cause the computer to execute steps of the method according to at least one of the method claims 13 in context with provision and control of the circumferential guiding/driving motion, especially by controlling the first motor (17) connected to at least one first drive unit (11) and controlling the second motor (27) connected to the at least one second drive unit (21).

15. Use of at least one crawler type drive unit (11, 11a, 11b, 11c) accommodating first and second circumferential tracks (12a, 12b) having different circumferential shapes/contours, for hanging/suspending and actively driving a crawler type vehicle (10) in order to travel in a suspended manner especially headlong at a structure via two motors (17, 27), especially for hanging/suspending a crawler type vehicle (10) according to one of claims 1 to 10, especially in a method according claim 13, wherein the vehicle (10) is suspended by means of a plurality of suspension elements (13, 13b) coupling the vehicle (10) to the structure, wherein the suspension elements (13, 13b) are attached to the first circumferential track at predefined first longitudinal positions corresponding to a raster defined by the structure, wherein a/the circumferential guiding/driving motion is provided by the first motor (17) connected to the at least one drive unit (11, 11a, 11b, 11c) such that the vehicle (10) moves along the structure (1) by decoupling a subset of the plurality of suspension elements (13, 13b) from resp. coupling them into the structure (1) when the suspension elements (13, 13b) are guided/driven along the circumferential tracks (12a, 12b).

## Patentansprüche

1. Raupenartiges Fahrzeug (10) zum hängenden Fahren, insbesondere kopfüber an einer Deckenkonstruktion (1), wobei das Fahrzeug (10) aufweist:
- eine Vielzahl von Aufhängungselementen (13, 13b), die für die Aufhängung des Fahrzeugs (10) und für die Kopplung des Fahrzeugs (10) mit der Struktur (1) konfiguriert sind,
- mindestens eine erste Antriebseinheit (11, 11a, 11b, 11c), die für eine Umfangsbewegung konfiguriert ist und eine erste Umfangsspur (12a) und eine zweite Umfangsspur (12b) aufnimmt, die eine andere Umfangsform/Kontur als die erste Umfangsspur aufweist, wobei die Aufhängungselemente (13, wobei die Aufhängungselemente (13, 13b) an der ersten Umfangsspur (12a) an vordefinierten ersten Längspositionen, die einem vordefinierten Raster entsprechen, befestigt sind, wobei das Fahrzeug (10) für eine Bewegung entlang der Struktur (1) konfiguriert ist, indem eine Teilmenge der Mehrzahl von Aufhängungselementen (13, 13b) von der Struktur (1) entkoppelt bzw. mit dieser gekoppelt wird. Entkopplung einer Teilmenge der Mehrzahl von Aufhängungselementen (13, 13b) von bzw. deren Einkopplung in die Struktur (1), wenn die Aufhängungselemente (13, 13b) durch die Umfangsbewegung entlang der beiden Umfangsspuren (12, 12a, 12b) geführt werden.

2. Raupenartiges Fahrzeug (10) nach Anspruch 1, wobei das Fahrzeug weiterhin umfasst:
- mindestens eine zweite Antriebseinheit (21), die so konfiguriert ist, dass sie eine Fortbewegung des Deckenfahrzeugs (10) in mindestens zwei Raumrichtungen ermöglicht, nämlich eine erste Raumrichtung, die durch die Struktur (1) vorgegeben ist, und eine zweite Raumrichtung, die durch die Führungs-/Antriebsbewegung der mindestens einen ersten Antriebseinheit (11) definiert ist, wobei die zweite Raumrichtung orthogonal zur ersten Raumrichtung ist, wobei die zweite Antriebseinheit (21) zur Fortbewegung des Fahrzeugs (10) in der ersten Raumrichtung unter Gewährleistung einer zumindest zweidimensionalen Fortbewegungsfähigkeit des Fahrzeugs (10) ausgebildet ist, wobei das jeweilige Federelement 13 zumindest ein Rad () aufweist, das zur Führung entlang der Struktur (1), insbesondere auf einer Radlauffläche eines jeweiligen/entsprechenden Profils der Struktur, angeordnet und ausgebildet ist,
- mindestens zwei einzeln ansteuerbare Motoren (17, 27), wobei mindestens eine erste Antriebseinheit (11) und mindestens eine zweite Antriebseinheit (21) mit mindestens einem Motor (17, 27) verbunden ist, und wobei die Motoren (17, 27) für die erste(n) Antriebseinheit(en) (11) und die zweite(n) Antriebseinheit(en) (21) unterschiedlich sind, wodurch eine aktive zweidimensionale Fahrfähigkeit des Fahrzeugs erreicht wird.

3. (10) nach Anspruch 1 oder 2, wobei die mindestens eine erste Antriebseinheit (11, 11a, 11b, 11c) des Raupenfahrzeugs (10) so konfiguriert ist, dass sie eine geschlossene Trajektorie der Aufhängungselemente (13, 13b) ermöglicht;
wobei die erste und die zweite umlaufende Schiene (12a, 12b) so geformt sind, dass die Aufhängungselemente (13, 13b) nur beim Passieren eines gekrümmten Abschnitts der Schiene von der Struktur (1) entkoppelt/eingekoppelt werden;
wobei die Aufhängungselemente (13, 13b) mittels einer ersten Umlenkrolle fest an/mit der ersten Umfangsbahn (12a) befestigt/gekoppelt sind, wobei die Aufhängungselemente (13, 13b) mittels jeweils einer zweiten Umlenkrolle innerhalb der zweiten Umfangsbahn (12b) geführt sind, wobei die erste und zweite Umlenkrolle vorzugsweise an einem Hebelarm des jeweiligen Aufhängungselementes angeordnet sind, wobei das jeweilige Aufhängungselement vorzugsweise eine L-Form aufweist; und/oder wobei jedes Aufhängungselement eine erste Umlenkrolle und eine zweite Umlenkrolle aufweist, die im Längsabstand zur ersten Umlenkrolle an einem Hebelarm des jeweiligen Aufhängungselementes angeordnet sind, wobei das Aufhängungselement über die erste und zweite Umlenkrolle mit der ersten und zweiten Schiene gekoppelt ist; und/oder wobei jedes Aufhängungselement einen Hebelarm aufweist, der eine von der zweiten Schiene geführte Riemenscheibe aufnimmt/abstützt, wobei die Riemenscheibe an einem freien Ende des Hebelarms angeordnet ist, und wobei der Hebelarm in einem linearen Abschnitt der Schiene zumindest annähernd in Antriebs-/Fahrrichtung zeigt; und/oder wobei die Aufhängungselemente (13, 13b) mittels Längsverbindungselementen miteinander verbunden sind, insbesondere durch Längsverbindungselemente, die in der Achse der ersten Riemenscheibe des jeweiligen Aufhängungselements verbunden sind, wodurch eine geschlossene Schleife von miteinander verbundenen Aufhängungselementen (13, 13b) gebildet wird, die in dem vorgegebenen Raster voneinander beabstandet sind;
wobei die erste Umfangsspur (12a) eine Kette aufweist oder mit einer Kette versehen/begrenzt ist, die eine geschlossene Schleife von miteinander verbundenen Kettenelementen bildet, die die Aufhängungselemente (13, 13b) verbinden, wobei das Fahrzeug (10) eine Mehrzahl von Gegenlagern aufweist, die insbesondere zum frontalen Zusammenwirken mit der Deckenstruktur (1) ausgebildet und angeordnet sind, wobei die Mehrzahl von Gegenlagern vorzugsweise mit der ersten Umfangsspur (12a) gekoppelt ist, insbesondere mit Kettenelementen der ersten Umfangsspur;
wobei das Fahrzeug (10) eine weitere erste Antriebseinheit aufweist, die weitere Umfangsschienen (12a, 12b) aufnimmt, wobei an den weiteren Umfangsschienen mehrere weitere Federelemente (13b) in vorgegebenen Längspositionen entsprechend einem/dem vorgegebenen Raster angebracht sind, die zur Aufhängung des Fahrzeugs (10) und zur Ankopplung des Fahrzeugs (10) an den Aufbau ausgebildet sind, insbesondere derart, dass das Fahrzeug (10) bezüglich entgegengesetzter Richtungen an der Struktur befestigt ist, wobei das Fahrzeug (10) weitere Aufhängungselemente (13b) aufweist, die an weiteren Umfangsbahnen (12a, 12b) befestigt sind, wobei die Federelemente (13) und die weiteren Federelemente (13b), die momentan am Aufbau (1) angreifen, das Fahrzeug (10) am Aufbau (1) bezüglich der Fahrrichtung und entgegengesetzt dazu sichern/blockieren, und/oder wobei das Fahrzeug (10) eine weitere Antriebseinheit aufweist, die die gleiche Konfiguration wie eine/der erste Antrieb aufweist, jedoch mit spiegelbildlicher Anordnung der weiteren Federelemente (13b) und weiterer Umfangsbahnen (12, 12a, 12b) aufweist, wobei die weiteren Federelemente (13b) in einer der Führungsrichtung der Federelemente (13) der ersten Antriebseinheit entgegengesetzten Richtung geführt/angetrieben werden, insbesondere derart, dass sowohl die jeweiligen Federelemente (13) als auch die weiteren Federelemente (13b) gleichzeitig an/von der Struktur abgekoppelt werden;
wobei die mindestens eine erste Antriebseinheit dazu ausgebildet ist, das jeweilige Federelement in einem unbelasteten Zustand aus der Struktur (1) herauszuheben, insbesondere derart, dass die mindestens eine erste Antriebseinheit sowohl eine Ent- /kopplungskinematik für eine Teilmenge von momentan unbelasteten Federelementen (13, 13b) als auch eine Aufhängung des Fahrzeugs (10) durch eine Teilmenge von momentan belasteten Federelementen (13, 13b) gleichzeitig vorsieht; und/oder wobei die mindestens eine erste Antriebseinheit eine im Wesentlichen ebene Konfiguration aufweist; und/oder wobei das Fahrzeug (10) mindestens zwei parallel zueinander angeordnete erste Antriebseinheiten aufweist; und/oder wobei die Umfangsspuren (12a, 12b) jeweils in einer zweidimensional verlaufenden Ebene geführt/angetrieben werden; und/oder wobei die mindestens eine erste Antriebseinheit mittels mindestens drei Aufhängungselementen (13, 13b) gekoppelt ist; und/oder wobei das jeweilige Aufhängungselement eine L-Form aufweist, die zwei Arme vorsieht, die die relative Anordnung von einem/dem Rad und ersten und zweiten Scheiben des jeweiligen Aufhängungselementes definieren.

4. Raupenartiges Fahrzeug (10) nach Anspruch 1, 2 oder 3, wobei die zweite Antriebseinheit (21) mindestens ein holonomes Rad (21.1) umfasst.

5. Raupenartiges Fahrzeug (10) nach Anspruch 4, wobei das holonome Rad scheibenförmig ist und eine Vielzahl von gleichmäßig über seinen Umfang verteilten Rollen aufweist.

6. Raupenartiges Fahrzeug (10) nach Anspruch 5, wobei die zweite Antriebseinheit (21) einen holonomischen Radsatz (21.2) umfasst, der aus mindestens zwei koaxial angeordneten holonomischen Rädern (21.1) besteht.

7. Raupenartiges Fahrzeug (10) nach Anspruch 6, wobei jedes der koaxial angeordneten holonomen Räder (21.1) einen vordefinierten Versatz in der azimutalen Richtung in Bezug auf ihre benachbarten holonomen Räder (21.1) aufweist.

8. Raupenartiges Fahrzeug (10) nach einem der Ansprüche 4 bis 7, wobei das/die holonome(n) Rad(e) () mit einem Rückholmechanismus (22) verbunden ist/sind, der eine Kraft auf das/die holonome(n) Rad(e) (21.1) ausübt, die es/sie gegen die Struktur (1) drückt.

9. Raupenartiges Fahrzeug (10) nach Anspruch 1, 2 oder 3, wobei die zweite Antriebseinheit (21) mindestens ein breites, längliches Zahnrad (21.3) zum Eingreifen in ein definiertes Raster (1b) in der zweiten Raumrichtung aufweist.

10. Raupenartiges Fahrzeug (10) nach Anspruch 8, wobei das längliche Zahnrad (21.3) an den Enden verjüngt ist.

11. Raupenartige Fahrzeuganordnung (100), umfassend mindestens ein raupenartiges Fahrzeug (10) nach einem der Ansprüche 1 bis 8 und eine/den Aufbau (1), der eine Mehrzahl von Profilen aufweist, die ein/den Raster des Aufbaus definieren, wobei die Aufhängungselemente (13, 13b) dazu ausgebildet sind, entlang der Profile in einer ersten Raumrichtung geführt zu werden, die durch den Aufbau definiert ist, wobei die Fahrbewegung des Fahrzeugs mindestens zwei Freiheitsgrade aufweist; und/oder wobei die Struktur (1) eine Mehrzahl von Profilen aufweist, die ein/den Raster der Struktur definieren, wobei das Fahrzeug (10) eine Mehrzahl von weiteren Aufhängungselementen (13b) aufweist, die das Fahrzeug (10) zusammen mit den Aufhängungselementen (13) aufhängen, wobei die Aufhängungselemente (13) und die weiteren Aufhängungselemente (13b) das Fahrzeug (10) an der Struktur (1) in Bezug auf die Fahrrichtung sichern/blockieren.

12. (100), umfassend mindestens ein raupenartiges Fahrzeug (10) nach Anspruch 9 oder 10 und ein Bauwerk (1'), das eine Mehrzahl von ersten Profilen aufweist, die ein Raster des Bauwerks in einer ersten Raumrichtung definieren, wobei die Mehrzahl von Profilen jeweils zweite Profile aufweisen, die ein Raster des Bauwerks in einer zweiten Raumrichtung definieren, wobei die Federelemente (13, 13b) dazu ausgebildet sind, entlang der ersten Profile in der durch die Struktur definierten ersten Raumrichtung geführt zu werden, wobei die Fahrbewegung des Fahrzeugs mindestens zwei Freiheitsgrade aufweist, und wobei das Getrieberad dazu ausgebildet ist, mit den zweiten Profilen zu kämmen, so dass sich das Raupenfahrzeug (10) über die mindestens zwei einzeln ansteuerbaren Motoren (17, 27) und Antriebseinheiten (11, 21) omnidirektional bewegen kann.

13. Verfahren zum Aufhängen/Abhängen eines raupenartigen Fahrzeugs (10) an/von einem Bauwerk (1) zum hängenden Fahren über dem Bauwerk, insbesondere eines raupenartigen Fahrzeugs (10) nach einem der Ansprüche 1 bis 10, wobei das Fahrzeug (10) mittels mehrerer Aufhängungselemente (13, 13b), die das Fahrzeug (10) mit dem Bauwerk koppeln, aufgehängt wird, wobei eine umlaufende Führungs-/Antriebsbewegung durch erste und zweite umlaufende Spuren (12a, 12a, 12b) definiert ist, die eine unterschiedliche Umfangsform/Kontur aufweisen, wobei die Aufhängungselemente (13, 13b) an der ersten Umfangsspur an vordefinierten ersten Längspositionen angebracht sind, die einem durch die Struktur definierten Raster entsprechen, wobei das Fahrzeug (10) so aufgehängt ist, dass es sich entlang der Struktur (1) bewegen kann, indem eine Teilmenge der Vielzahl von Aufhängungselementen (13, 13b) von der Struktur (1) entkoppelt bzw. mit dieser gekoppelt wird. wobei das Fahrzeug (10) so aufgehängt ist, dass es sich entlang der Struktur (1) bewegen kann, indem eine Untergruppe der Vielzahl von Aufhängungselementen (13, 13b) von der Struktur (1) entkoppelt bzw. in diese eingekoppelt wird, wenn die Aufhängungselemente (13, 13b) durch die Umfangsbewegung entlang der Umfangsspuren (12a, 12b) geführt werden, wobei die Umfangsbewegung durch die Aufhängungselemente (13, 13b) übertragen wird, die vorübergehend in die Struktur eingreifen; und/oder wobei die Umfangsbewegung durch erste Antriebseinheiten (11a, 11b) bereitgestellt wird, wobei mindestens zwei Motoren die mindestens eine erste Antriebseinheit und mindestens eine zweite Antriebseinheit antreiben, die eine aktive zweidimensionale Bewegung des Raupenfahrzeugs (10) ermöglichen.

14. Computerprogramm mit Befehlen, die bei Ausführung des Programms durch einen Computer den Computer veranlassen, Schritte des Verfahrens nach wenigstens einem der Verfahrensansprüche 13 im Zusammenhang mit der Bereitstellung und Steuerung der Umfangsführungs-/Antriebsbewegung auszuführen, insbesondere durch Steuerung des mit wenigstens einer ersten Antriebseinheit (11) verbundenen ersten Motors (17) und Steuerung des mit der wenigstens einen zweiten Antriebseinheit (21) verbundenen zweiten Motors (27).

15. Verwendung mindestens einer raupenartigen Antriebseinheit (11, 11a, 11b, 11c), die erste und zweite Umfangsketten (12a, 12b) mit unterschiedlichen Umfangsformen/Konturen aufnimmt, um ein raupenartiges Fahrzeug (10) hängend/hängend und aktiv anzutreiben, um sich hängend, insbesondere kopfüber, an einer Struktur über zwei Motoren (17, 27), insbesondere zum Aufhängen/Aufschieben eines Raupenfahrzeugs (10) nach einem der Ansprüche 1 bis 10, insbesondere bei einem Verfahren nach Anspruch 13, wobei das Fahrzeug (10) mittels einer Mehrzahl von Aufhängungselementen (13, wobei das Fahrzeug (10) mittels einer Mehrzahl von Aufhängungselementen (13, 13b) aufgehängt ist, die das Fahrzeug (10) mit der Struktur koppeln, wobei die Aufhängungselemente (13, 13b) an vordefinierten ersten Längspositionen, die einem durch die Struktur definierten Raster entsprechen, an der ersten Umfangsspur befestigt sind, wobei eine/eine Umfangsführungs-/Antriebsbewegung durch den ersten Motor (17), der mit der mindestens einen Antriebseinheit (11, 11a, 11b, 11c) verbunden ist, bereitgestellt wird, so dass sich das Fahrzeug (10) entlang der Struktur (1) bewegt, indem eine Teilmenge der Mehrzahl von Aufhängungselementen (13, 13b) von der Struktur (1) entkoppelt bzw. mit dieser gekoppelt wird. Entkopplung einer Teilmenge der Vielzahl von Aufhängungselementen (13, 13b) von der Struktur (1) bzw. deren Einkopplung in die Struktur (1), wenn die Aufhängungselemente (13, 13b) entlang der Umfangsschienen (12a, 12b) geführt/angetrieben werden.

## Revendications

1. Véhicule de type chenille (10) configuré pour se déplacer de manière suspendue, en particulier en fonçant tête baissée sur une structure de plafond (1), dans lequel le véhicule (10) présente :
- une pluralité d'éléments de suspension (13, 13b) configurés pour suspendre le véhicule (10) et configurés pour coupler le véhicule (10) à la structure (1),
- au moins une première unité d'entraînement (11, 11a, 11b, 11c) configurée pour un mouvement circonférentiel et accueillant une première piste circonférentielle (12a) et une seconde piste circonférentielle (12b) ayant une forme/contour circonférentiel différent de la première piste circonférentielle, dans laquelle les éléments de suspension (13, 13b) sont fixés à la première voie circonférentielle (12a) à des premières positions longitudinales prédéfinies correspondant à une trame prédéfinie, le véhicule (10) étant configuré pour se déplacer le long de la structure (1) en découplant un sous-ensemble de la pluralité d'éléments de suspension (13, 13b), resp. en les couplant à la structure (1). en les accouplant à la structure (1) lorsque les éléments de suspension (13, 13b) sont guidés le long des deux pistes circonférentielles (12, 12a, 12b) par le mouvement circonférentiel.

2. Véhicule de type chenille (10) selon la revendication 1, dans lequel le véhicule comprend en outre :
- au moins une deuxième unité d'entraînement (21) configurée pour permettre la locomotion du véhicule plafonnier (10) dans au moins deux directions spatiales, à savoir une première direction spatiale prédéfinie par la structure (1) et une deuxième direction spatiale définie par le mouvement de guidage/conduite de l'au moins une première unité d'entraînement (11), la deuxième direction spatiale étant orthogonale à la première direction spatiale, dans laquelle la deuxième unité d'entraînement (21) est configurée pour la locomotion du véhicule (10) dans la première direction spatiale, assurant au moins une capacité de locomotion bidimensionnelle du véhicule (10), dans laquelle l'élément de suspension respectif 13 présente au moins une roue () qui est disposée et configurée pour être guidée le long de la structure (1), en particulier sur une bande de roulement d'un profil respectif/correspondant de la structure,
- au moins deux moteurs (17, 27) contrôlables individuellement, dans lesquels au moins une première unité d'entraînement (11) et au moins une deuxième unité d'entraînement (21) sont connectées à au moins un moteur (17, 27), et dans lesquels le moteur (17, 27) pour la ou les premières unités d'entraînement (11) et les deuxièmes unités d'entraînement (21) sont différentes, ce qui permet au véhicule d'avoir une capacité de déplacement active en deux dimensions.

3. Véhicule de type chenille (10) selon la revendication 1 ou 2, dans lequel l'au moins une première unité d'entraînement (11, 11a, 11b, 11c) du véhicule de type chenille (10) est configurée pour permettre une trajectoire en boucle fermée des éléments de suspension (13, 13b) ;
dans lequel les première et deuxième voies circonférentielles (12a, 12b) sont façonnées de telle sorte que les éléments de suspension (13, 13b) ne sont désaccouplés/accouplés de/à la structure (1) que lorsqu'ils passent une section incurvée des voies ;
dans lequel les éléments de suspension (13, 13b) sont fixés/couplés de manière fixe au moyen d'une première poulie à/avec la première voie circonférentielle (12a), dans lequel les éléments de suspension (13, 13b) sont guidés dans la deuxième voie circonférentielle (12b) au moyen d'une deuxième poulie respectivement, dans lequel la première et la deuxième poulie sont de préférence disposées à un bras de levier de l'élément de suspension respectif, dans lequel l'élément de suspension respectif a de préférence une forme en L ; et/ou dans lequel chaque élément de suspension présente une première poulie et une deuxième poulie disposées à distance longitudinale par rapport à la première poulie au niveau d'un bras de levier de l'élément de suspension respectif, dans lequel l'élément de suspension est couplé à la première et à la deuxième voie par l'intermédiaire de la première et de la deuxième poulie ; et/ou dans lequel chaque élément de suspension présente un bras de levier accueillant/soutenant une poulie guidée par la deuxième voie, dans lequel la poulie est disposée à une extrémité libre du bras de levier et dans lequel, dans une section linéaire de la voie, le bras de levier est orienté dans la direction d'entraînement/de déplacement, au moins grossièrement ; et/ou dans lequel les éléments de suspension (13, 13b) sont reliés les uns aux autres au moyen d'éléments de liaison longitudinaux, en particulier par des éléments de liaison longitudinaux reliés à l'axe de la première poulie de l'élément de suspension respectif, formant ainsi une boucle fermée d'éléments de suspension interdépendants (13, 13b) distants les uns des autres dans la trame prédéfinie ;
dans lequel la première voie circonférentielle (12a) présente une chaîne ou est fournie/définie par une chaîne formant une boucle fermée d'éléments de chaîne interdépendants reliant les éléments de suspension (13, 13b), dans lequel le véhicule (10) présente une pluralité de contre-roulements, spécialement configurés et disposés pour interagir frontalement avec la structure du plafond (1), dans lequel la pluralité de contre-roulements est de préférence couplée à/avec la première voie circonférentielle (12a), spécialement couplée à des éléments de chaîne de la première voie circonférentielle ;
dans lequel le véhicule (10) présente une autre première unité d'entraînement accueillant d'autres voies circonférentielles (12a, 12b), dans lequel plusieurs autres éléments de suspension (13b) sont fixés aux autres voies circonférentielles dans des positions longitudinales prédéfinies correspondant à une trame prédéfinie et sont configurés pour suspendre le véhicule (10) et pour coupler le véhicule (10) à la structure, en particulier de manière à ce que le véhicule (10) soit fixé à la structure dans des directions opposées, le véhicule (10) présentant d'autres éléments de suspension (13b) fixés à d'autres pistes circonférentielles (12a, 12b), dans lequel les éléments de suspension (13) et les autres éléments de suspension (13b) s'engageant momentanément dans la structure (1) sécurisent/bloquent le véhicule (10) sur la structure (1) par rapport à la direction de conduite/de déplacement et à l'opposé de celle-ci, et/ou dans lequel le véhicule (10) présente une autre unité d'entraînement qui présente la même configuration que la première unité d'entraînement mais avec une disposition inversée des autres éléments de suspension (13b) et des autres voies circonférentielles (12, 12a, 12b), dans laquelle les autres éléments de suspension (13b) sont guidés/entraînés dans une direction opposée à la direction de guidage des éléments de suspension (13) de la première unité d'entraînement, en particulier de manière à ce que les éléments de suspension respectifs (13) et les autres éléments de suspension (13b) soient simultanément désaccouplés/accouplés de la structure ;
dans laquelle au moins une première unité d'entraînement est configurée pour soulever l'élément de suspension respectif hors de la structure (1) à l'état déchargé, en particulier de telle sorte que l'au moins une première unité d'entraînement assure à la fois la cinématique de désaccouplement pour un sous-ensemble d'éléments de suspension momentanément déchargés (13, 13b) et la suspension du véhicule (10) par un sous-ensemble d'éléments de suspension momentanément chargés (13, 13b) ; et/ou
dans laquelle l'au moins une première unité d'entraînement a une configuration sensiblement plane ; et/ou dans lequel le véhicule (10) présente au moins deux premières unités d'entraînement disposées parallèlement l'une à l'autre ; et/ou dans lequel les pistes circonférentielles (12a, 12b) sont respectivement guidées/entraînées dans un plan, s'étendant de manière bidimensionnelle ; et/ou dans lequel au moins une première unité d'entraînement est couplée au moyen d'au moins trois éléments de suspension (13, 13b) ; et/ou dans lequel l'élément de suspension respectif a une forme en L qui fournit deux bras définissant la disposition relative d'une/de la roue et des première et deuxième poulies de l'élément de suspension respectif.

4. Véhicule de type chenille (10) selon la revendication 1, 2 ou 3, dans lequel la deuxième unité d'entraînement (21) comprend au moins une roue holonomique (21.1).

5. Véhicule de type chenille (10) selon la revendication 4, dans lequel la roue holonomique a la forme d'un disque et comprend une pluralité de rouleaux également répartis sur sa circonférence.

6. Véhicule de type chenille (10) selon la revendication 5, dans lequel la deuxième unité d'entraînement (21) comprend un train de roues holonomes (21.2) constitué d'au moins deux roues holonomes (21.1) disposées coaxialement.

7. Véhicule de type chenille (10) selon la revendication 6, dans lequel chacune des roues holonomes (21.1) disposées coaxialement présente un décalage prédéfini dans la direction azimutale par rapport aux roues holonomes (21.1) adjacentes.

8. Véhicule de type chenille (10) selon l'une des revendications 4 à 7, dans lequel la ou les roues holonomes () sont reliées à un mécanisme de rappel (22) qui applique une force à la ou aux roues holonomes (21.1) en les pressant contre la structure (1).

9. Véhicule à chenilles (10) selon la revendication 1, 2 ou 3, dans lequel la deuxième unité d'entraînement (21) comprend au moins une roue dentée large et allongée (21.3) pour s'engrener avec une trame définie (1b) dans la deuxième direction spatiale.

10. Véhicule de type chenille (10) selon la revendication 8, dans lequel la roue dentée allongée (21.3) est effilée aux extrémités.

11. Arrangement de véhicule de type chenille (100) comprenant au moins un véhicule de type chenille (10) selon l'une des revendications 1 à 8 et une structure (1) présentant une pluralité de profils définissant une trame de la structure, dans lequel les éléments de suspension (13, 13b) sont configurés pour être guidés le long des profils dans une première direction spatiale définie par la structure, le mouvement de déplacement du véhicule ayant au moins deux degrés de liberté ; et/ou dans lequel la structure (1) présente une pluralité de profils définissant la trame de la structure, dans lequel le véhicule (10) présente une pluralité d'autres éléments de suspension (13b) suspendant le véhicule (10) avec les éléments de suspension (13), dans lequel les éléments de suspension (13) et les autres éléments de suspension (13b) fixent/bloquent le véhicule (10) à la structure (1) par rapport à la direction de conduite/de déplacement.

12. Arrangement de de véhicule de type chenille (100) comprenant au moins un véhicule de type chenille (10) selon la revendication 9 ou 10 et une structure (1') présentant une pluralité de premiers profils définissant une trame de la structure dans une première direction spatiale, dans laquelle la pluralité de profils présente chacun des seconds profils définissant une trame de la structure dans une seconde direction spatiale, dans laquelle les éléments de suspension (13, 13b) sont configurés pour être guidés le long des premiers profils dans la première direction spatiale définie par la structure, le mouvement de déplacement du véhicule ayant au moins deux degrés de liberté, et dans lequel la roue dentée est configurée pour s'engrener avec les seconds profils, de sorte que le véhicule à chenilles (10) peut se déplacer de manière omnidirectionnelle via les au moins deux moteurs (17, 27) et unités d'entraînement (11, 21) contrôlables individuellement.

13. Méthode d'accrochage/suspension d'un véhicule de type chenille (10) à/depuis un structure (1) pour se déplacer de manière suspendue le long de la structure, en particulier un (10) véhicule de type chenillee selon l'une des revendications 1 à 10, dans laquelle le véhicule (10) est suspendu au moyen d'une pluralité d'éléments de suspension (13, 13b) couplant le véhicule (10) à la structure, dans laquelle un mouvement de guidage/conduite circonférentiel est défini par une première et une deuxième voies circonférentielles (12a, 12b) ayant une forme/contour circonférentiel différent, dans lequel les éléments de suspension (13, 13b) sont fixés à la première piste circonférentielle à des premières positions longitudinales prédéfinies correspondant à une trame définie par la structure, dans lequel le véhicule (10) est suspendu de manière à pouvoir se déplacer le long de la structure (1) en découplant un sous-ensemble de la pluralité d'éléments de suspension (13, 13b) de resp. en les accouplant à la structure (1) lorsque les éléments de suspension (13, 13b) sont guidés le long des voies circonférentielles (12a, 12b) par le mouvement circonférentiel, le mouvement circonférentiel étant transmis/transféré par les éléments de suspension (13, 13b) s'engageant momentanément dans la structure ; et/ou dans lequel le mouvement circonférentiel est fourni par les premières unités d'entraînement (1 1a, 11b), au moins deux moteurs alimentant au moins une première unité d'entraînement et au moins une deuxième unité d'entraînement permettant un déplacement bidimensionnel actif du véhicule de type chenille (10).

14. Programme d'ordinateur comprenant des instructions qui, lorsque le programme est exécuté par un ordinateur, amènent l'ordinateur à exécuter des étapes du procédé selon au moins une des revendications de procédé 13 dans le cadre de la fourniture et de la commande du mouvement de guidage/entraînement circonférentiel, notamment en commandant le premier moteur (17) relié à au moins une première unité d'entraînement (11) et en commandant le deuxième moteur (27) relié à au moins une deuxième unité d'entraînement (21).

15. Utilisation d'au moins une unité d'entraînement de type chenille (11, 11a, 11b, 11c) accueillant une première et une deuxième chenilles circonférentielles (12a, 12b) ayant des formes/contours circonférentiels différents, pour accrocher/suspendre et entraîner activement un véhicule de type chenille (10) afin de se déplacer de manière suspendue, en particulier tête baissée, sur une structure, par l'intermédiaire de deux moteurs (17, 27), notamment pour suspendre un véhicule à chenilles (10) selon l'une des revendications 1 à 10, notamment dans un procédé selon la revendication 13, dans lequel le véhicule (10) est suspendu au moyen d'une pluralité d'éléments de suspension (13, 13b) reliant le véhicule (10) à la structure, les éléments de suspension (13, 13b) étant fixés à la première voie circonférentielle à des premières positions longitudinales prédéfinies correspondant à une trame définie par la structure, le mouvement de guidage/entraînement circonférentiel étant fourni par le premier moteur (17) relié à l'au moins une unité d'entraînement (11, 11a, 11b, 11c) de telle sorte que le véhicule (10) se déplace le long de la structure (1) en découplant un sous-ensemble de la pluralité d'éléments de suspension (13, 13b) de resp. en les accouplant à la structure (1) lorsque les éléments de suspension (13, 13b) sont guidés/entraînés le long des pistes circonférentielles (12a, 12b).
